# EUROPEAN PATENT APPLICATION

(11) **EP 4 628 870 A1**
(43) Date of publication of application: **08.10.2025**
(21) Application number: 25168484.1
(22) Date of filing: 04.04.2025
(51) Int. Cl.: G01N 15/1429, G01N 15/14

(54) **IMPROVED GATE/POPULATION NAMING IN FLOW CYTOMETRY DATA ANALYSIS BASED ON GEOMETRY AND DATA DISTRIBUTION**

(30) Priority: 05.04.2024 US 202463575430 P
(71) Applicant: Becton, Dickinson and Company, Franklin Lakes, New Jersey 07417-1880 (US)
(72) Inventor: Simm, Maciej, 97520 Ashland, Oregon (US)
(74) Representative: Bals & Vogel Patentanwälte PartGmbB

(57) **Abstract**

The present disclosure provides methods of labeling flow cytometry data. Methods of interest include: receiving a flow cytometry gate input including a portion of the cytometry data; identifying a plurality of parameters, each parameter associated with a dimension of a data space of the portion of the cytometry data; calculating a metric for each parameter of at least a portion of the plurality of parameters based on a magnitude of the cytometry data associated with the respective parameter's dimension; and generating a label for the flow cytometry gate input based on at least one metric and a predetermined magnitude threshold associated with the metric. The subject methods may be implemented automatically via computer. Systems and non-transitory computer-readable storage media for carrying out the subject methods are also provided.

## Description

### CROSS-REFERENCE TO RELATED APPLICATION

Pursuant to 35 U.S.C. § 119 (e), this application claims priority to the filing dates of United States Provisional Patent Application Serial No 63/575,430 filed April 5, 2024, the disclosure of which application is incorporated herein by reference in their entirety.

### INTRODUCTION

The characterization of analytes in biological fluids has become an important part of biological research, medical diagnoses, and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort particles of interest such as, e.g., cells of a blood sample. A flow cytometer typically includes a sample reservoir for receiving a fluid sample, such as a blood sample, and a sheath reservoir containing a sheath fluid. The flow cytometer transports the particles (including cells) in the fluid sample as a particle stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. Separation of particles of interest can been achieved by adding sorting or collection capabilities to a flow cytometer. For example, particles in a segregated stream, detected as having one or more desired characteristics, may be individually isolated from the sample stream by mechanical or electrical removal.

To characterize the particles in the flow stream, light must impinge on the flow stream and be collected. Light sources in flow cytometers can vary and may include one or more broad spectrum lamps, light emitting diodes, as well as single wavelength lasers. The light source is aligned with the flow stream and an optical response from the illuminated particles is collected and quantified. For example, particles in a fluid suspension, as they pass by an interrogation region, may be exposed to excitation light and the light scattering and fluorescence properties of the particles may be measured. Particles or components thereof typically are labeled with fluorescent dyes to facilitate detection. A multiplicity of different particles or components may be simultaneously detected by using spectrally distinct fluorescent dyes to label the different particles or components. In some implementations, a multiplicity of detectors, one for each of the scatter parameters to be measured, and one or more for each of the distinct dyes to be detected, are included in the flow cytometer. The data obtained comprise the signals measured for each of the light scatter detectors and fluorescence detectors.

The parameters measured using a flow cytometer typically include light at the excitation wavelength scattered by the particle in a narrow angle along a mostly forward direction, referred to as forward-scatter (FSC), the excitation light that is scattered by the particle in an orthogonal direction to the excitation laser, referred to as side-scatter (SSC), and the light emitted from fluorescent molecules in one or more detectors that measure signal over a specific range of spectral wavelengths. Different cell types can be identified by their light scatter characteristics and fluorescence emissions resulting from, e.g., labeling various cell proteins or other constituents with fluorescent dye-labeled antibodies or other fluorescent probes.

Flow cytometers may further include means for recording the measured data and analyzing the data. For example, data storage and analysis may be carried out using a computer connected to the detection electronics. For example, the data can be stored in tabular form, where each row corresponds to data for one particle, and the columns correspond to each of the measured parameters. The use of standard file formats, such as an "FCS" file format, for storing data from a flow cytometer facilitates analyzing data using separate programs and/or machines. Using current analysis methods, the data typically are displayed in 1-dimensional histograms or 2-dimensional (2D) plots for ease of visualization, but other methods may be used to visualize data.

The data obtained from an analysis of cells (or other particles) by flow cytometry are often multidimensional, where each cell corresponds to a point in a multidimensional space defined by the parameters measured. Populations of cells or particles can be identified as clusters of points in the data space. The identification of clusters, and thereby populations, can be carried out manually by drawing a gate around a population displayed in one or more 2-dimensional plots, referred to as "scatter plots" or "dot plots" of the data. Alternatively, population clusters can be identified and gates that define the limits of the populations can be determined automatically. Examples of methods for automated gating have been described in, for example, U.S. Pat. Nos. 4,845,653; 5,627,040; 5,739,000; 5,795,727; 5,962,238; 6,014,904; and 6,944,338; and U.S. Pat. Pub. No. 2012/0245889, each incorporated herein by reference. Gating is used to make sense of the large quantity of data that may be generated from a sample.

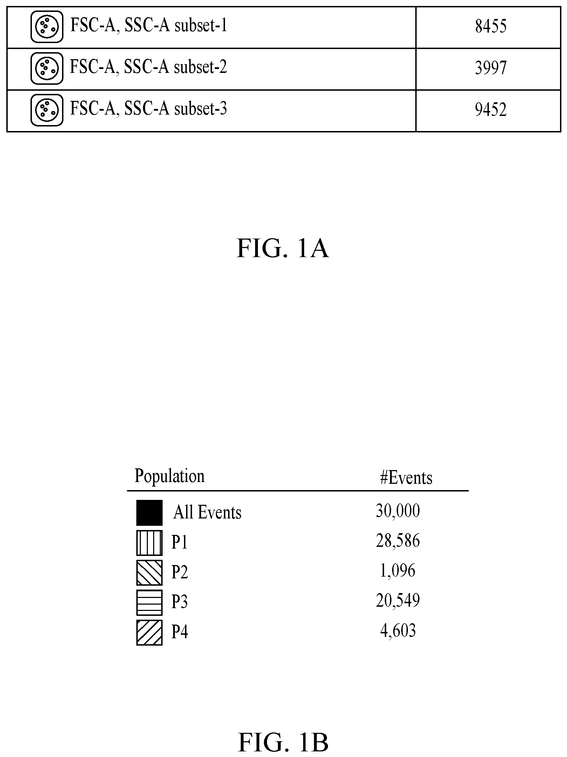

While the creation and manipulation of gates can help improve the speed and accuracy of understanding flow cytometry data, the features and characteristics that distinguish gated populations from each other are often not easily discernible to the user. For example, common high-dimensional analysis workflows include creating, or deriving, a set of parameters that represent the particles or cells in a low-dimensional graph by creating a smaller set of parameters that attempt to summarize information from all other parameters. This is known as dimensionality reduction. However, when viewing and drawing gates in dimensionally reduced data spaces, it is difficult if not impossible to know which parameters contribute to a gated population's relative location within a data space. As a result, gates and particle populations often get labeled and saved in a general non-descriptive manner, typically reflecting the default population or gate names provided by a given data analysis software. For example, **FIGS. 1A** to **1B** depict common naming/labeling conventions employed by conventional flow cytometry data analysis programs. In **FIG. 1A****,** automatically generated gate labels reflect a general name for each axes of a two-dimensional plot, and a default sequential label reflecting the order in which each gate was created. In **FIG. 1B****,** automatically generated population labels merely reflect the order in which each population was identified or gated.

### SUMMARY

The present inventor has realized that improvements can be made to the processes by which flow cytometry gates and their corresponding particle (e.g., cell) populations are named or labeled during analysis. In particular it was realized that, due to the ever-increasing complexity of flow cytometry data and often in the interest of saving time, uninformative default gate or population labels provided by data analysis programs are commonly selected by users to label newly created gates and newly identified particle populations. This results in difficulties in data interpretation, longer analysis times, and potentially missed findings as the plots and charts used to visualize and understand flow cytometry data become increasingly jumbled and hard to follow. Additionally, even when a user takes the time to devise and manually enter a gate or population label the entered label is relatively arbitrary, leading to difficulty in sharing data between users or even confusion of the user when reviewing the gate or population at a later time. As such, a process for creating clear, informative, and easily comparable flow cytometry gate and particle population labels is desirable. Particularly, automated processes are needed for generating intuitive and descriptive flow cytometry gate and particle population labels that can be readily and unambiguously understood by users. Further, it may be desirable for the automated processes to be standardizable, such that the same label may be automatically generated for similar populations of particles gated in separate flow cytometry data sets. Embodiments of the present disclosure satisfy these needs and desires.

Aspects of the disclosure include methods of labeling flow cytometry data, e.g., by generating a label for a flow cytometry gate input. Methods of interest include: receiving a flow cytometry gate input including a portion of the cytometry data; identifying a plurality of parameters, each parameter associated with a dimension of a data space of the portion of the cytometry data; calculating a metric for each parameter of at least a portion of the plurality of parameters based on a magnitude of the cytometry data associated with the respective parameter's dimension; and generating a label for the flow cytometry gate input based on at least one metric and a predetermined magnitude threshold associated with the metric.

Where desired, the subject methods are implemented automatically via computer. In some embodiments, the generated label includes the name of the respective parameter of the metric and an indicator of the magnitude of the parameter determined by comparing the metric and the magnitude threshold. In some embodiments, the generated label includes the name of the parameter, the metric, a symbol associated with the parameter, a symbol associated with the metric, or any combination thereof. In some embodiments, the metric is normalized by the average magnitude of the plurality of parameters. In some embodiments, the metric is normalized by the sum of the magnitudes of the plurality of parameters.

In certain embodiments, calculating the metric for a parameter may include: determining a ratio between a maximum magnitude of the parameter associated dimension within the portion of the cytometry data and a magnitude of the parameter associated dimension within the entire cytometry data. In these embodiments, each dimension of the data space may be associated with one parameter and, e.g., each dimension may correspond to measurements of a parameter generated using a light detection system of a flow cytometer. In some embodiments, generating the label may include determining if the metric (e.g., the ratio) meets or exceeds a predetermined magnitude threshold (e.g., a predetermined ratio value). In some embodiments, calculating the metric for a parameter may include: determining a ratio between a minimum magnitude of the parameter associated dimension within the portion of the cytometry data and a magnitude of the parameter associated dimension within the entire cytometry data. In some embodiments, multiple metrics are calculated for a parameter. For example, a first metric may be calculated using the maximum magnitude of the parameter associated dimension a second metric may be calculated using the minimum magnitude of the parameter associated dimension (e.g., as described above).

In certain embodiments calculating the metric for a parameter may include: determining a difference between an average magnitude of the parameter associated dimension within the portion of the cytometry data and a magnitude of the parameter associated dimension within the entire of the cytometry data not included within the portion of the cytometry data. In these embodiments, each dimension of the data space may be associated with a plurality of parameters (i.e., the data space may be a dimensionally reduced data space) and, e.g., each dimension may be associated with measurements of a plurality of parameters generated using a light detection system of a flow cytometer. In cases wherein the data space is a dimensionally reduced data space, each magnitude of the parameter associated dimension used to calculate the metric may be associated with only the respective parameter of the metric (i.e., the parameter for which the metric is being calculated). For example, each input parameter used to generate the dimensionally reduced data space (e.g., measurements of every input parameter used by a dimension reduction platform to generate the dimensionally reduced data space) may be included in the flow cytometry data or may be obtained and used to calculate a metric for each respective parameter. In some embodiments, the average is a mean such as, e.g., a geometric mean. In some embodiments, generating the label may include determining if the metric (e.g., the ratio) meets or exceeds a predetermined magnitude threshold (e.g., a predetermined ratio value).

In certain embodiments, the metric is determined not to meet or exceed the predetermined magnitude threshold and the generated label includes a negative indicator of the parameter. In other embodiments, the metric is determined to meet or exceed the predetermined magnitude threshold and the generated label includes a positive indicator of the parameter.

In certain embodiments, the input is received by a selection on a graphical representation of the data space. In some embodiments, the selection is created by a user using, e.g., an operator input module including a touch screen or a mouse. In some embodiments, the data space is dimensionally reduced. In these cases, the dimensionality reduction may include a Principal Component Analysis (PCA) reduction, a t-distributed Stochastic Neighbor Embedding (t-SNE) reduction, a Uniform Manifold Approximation and Projection (UMAP) reduction, a machine learning model reduction, or any combination thereof. In some embodiments, the flow cytometry data includes a plurality of data points, wherein each data point corresponds to a measurement of a single sample cell. In some embodiments, each of the plurality of parameters corresponds to the presence or expression of a marker. In some embodiments, the marker is the expression of a specific protein. In these cases, expression of the protein may be measured using a specific binding member conjugated to a fluorescent particle. In some embodiments, expression of the protein is measured using a detection channel configured to measure light within a specific range of wavelengths. In some embodiments, the generated label includes the name of each specific marker and an indicator of the presence or level of expression of the marker.

In certain embodiments, identifying the plurality of parameters includes determining the number of dimensions of the data space. In these cases, identifying the plurality of parameters may include determining the number of parameters associated with each dimension of the data space. In some embodiments, the method further includes displaying a confirmation prompt based on the generated label. In some embodiments, the method further includes displaying a prompt to edit the name of the generated label.

Aspects of the disclosure also include systems for performing the methods of generating a label for a flow cytometry gate, e.g., as described above and herein. Systems of interest include: a flow cytometer configured to produce flow cytometry data (e.g., a plurality of parameter measurements for a plurality of particles of a biological sample); and a processor including memory operably coupled to the processor wherein the memory includes instructions stored thereon, which when executed by the processor, cause the processor to: receive a flow cytometry gate input including a portion of the flow cytometry data; identify a plurality of parameters, each parameter associated with a dimension of a data space of the portion of the flow cytometry data; calculate a metric for each parameter of at least a portion of the plurality of parameters based on a magnitude of the flow cytometry data associated with the respective parameter's dimension; and generate a label for the flow cytometry gate input based on at least one metric and a predetermined magnitude threshold associated with the metric. Aspects of the disclosure further include non-transitory computer-readable storage media including instructions stored thereon for labeling flow cytometry data, e.g., as described above and herein.

### BRIEF DESCRIPTION OF THE FIGURES

The disclosure may be best understood from the following detailed description when read in conjunction with the accompanying drawings. Included in the drawings are the following figures:
**FIGS. 1A** to **1B** depict common naming conventions employed by conventional flow cytometry data analysis programs.
**FIG. 2** depicts a flow diagram for practicing methods of labeling flow cytometry data according to certain embodiments.
**FIGS. 3A** to **3B** illustrate a method for automatically generating a label for a gate using a geometric approach in accordance with an embodiment of the disclosure.
**FIGS. 4A** to **4B** illustrate a method for automatically generating a label for a gate using a geometric approach in accordance with an embodiment of the disclosure.
**FIGS. 5A** to **5C** illustrate a method for automatically generating a label for a gate using a data distribution approach in accordance with an embodiment of the disclosure.
**FIG. 6** depicts a flow diagram for practicing methods of labeling flow cytometry data using either a geometric approach or a data distribution approach according to certain embodiments.
**FIG. 7** depicts a functional block diagram of an exemplary flow cytometer control system used to implement certain embodiments of the gate labeling methods of the disclosure.
**FIG. 8** depicts a block diagram of a computing system for use with certain embodiments of the gate labeling methods of the disclosure.
**FIG. 9** provides schematics of an exemplary flow cytometer system for use with certain embodiments of the gate labeling methods of the disclosure.
**FIG. 10** illustrates an exemplary flow cytometer system for use with certain embodiments of the gate labeling methods of the disclosure.
**FIG. 11** provides a functional block diagram of a flow cytometer system for use with certain embodiments of the gate labeling methods of the disclosure.
**FIGS. 12A** to **12B** illustrate an exemplary sorting flow cytometer and data processing technique for fluorescence imaging using radiofrequency tagged emissions for use with certain embodiments of the gate labeling methods of the disclosure.
**FIGS. 13A** to **13C** provide exemplary gate labels automatically generated for a bivariate plot reflecting real parameters in accordance with an embodiment of the disclosure.
**FIGS. 14A** to **14C** provide an exemplary gate label automatically generated for a bivariate plot of a dimensionally reduced data space in accordance with an embodiment of the disclosure.

### DETAILED DESCRIPTION

The present disclosure provides methods of labeling flow cytometry data. Methods of interest include: receiving a flow cytometry gate input including a portion of the cytometry data; identifying a plurality of parameters, each parameter associated with a dimension of a data space of the portion of the cytometry data; calculating a metric for each parameter of at least a portion of the plurality of parameters based on a magnitude of the cytometry data associated with the respective parameter's dimension; and generating a label for the flow cytometry gate input based on at least one metric and a predetermined magnitude threshold associated with the metric. The subject methods may be implemented automatically via computer. Systems and non-transitory computer-readable storage media for carrying out the subject methods are also provided.

Before the present invention is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### METHODS

As summarized above, methods of labeling flow cytometry data by generating a label for a flow cytometry gate input are provided. Aspects of the methods include: receiving a flow cytometry gate input including a portion of the cytometry data; identifying a plurality of parameters, each parameter associated with a dimension of a data space of the portion of the cytometry data; calculating a metric for each parameter of at least a portion of the plurality of parameters based on a magnitude of the cytometry data associated with the respective parameter's dimension; and generating a label for the flow cytometry gate input based on at least one metric and a predetermined magnitude threshold associated with the metric. The subject methods may be computer-implemented methods as, e.g., the methods are particularly suited for automatic implementation via computer. In some embodiments, the subject methods are used in a flow cytometry workflow to automatically generate a label for a flow cytometry gate, wherein the automatically generated label may or may not then be associated with the gate based on feedback provided by a user.

As described above, embodiments of the methods include identifying a plurality of parameters, each parameter associated with a dimension of a data space of a portion of the flow cytometry data. By "parameter" is meant a quantifiable property (such as, e.g., an optical property) that is measured by a flow cytometer, and which can be used to differentiate particles of a sample from one another. In some embodiments, one or more of the parameters of a data space may correspond to the presence or expression of a specific marker (such as, e.g., the expression of a specific protein). For example, cells of a biological sample may be contacted with fluorescently labeled specific binding members (e.g., antibodies conjugated to fluorochromes) of a protein of interest. The parameter (i.e., expression of the protein of interest) may then be measured by a flow cytometer detection channel configured to measure fluorescence emitted by the specific binding members. The flow cytometry data may include a plurality of data points, wherein each data point corresponds to a measurement of a single cell (e.g., of a given sample or flow cytometer experiment) and includes a single value or measurement for each parameter of the data space.

In some embodiments, one or more dimensions of the data space are associated with one parameter (i.e., one or more dimensions directly correspond to measurements of a single parameter measured by a flow cytometer). In some embodiments, one or more dimensions of the data space are associated with a plurality of parameters (i.e., one or more dimensions correspond to measurements of two or more different parameters measured by a flow cytometer). For example, a dimension of the data space may correspond to measurements of two different parameters dimensionally reduced into one set of values (e.g., wherein there is one value for each data point of the flow cytometry data).

As used herein, a "gate" generally refers to a classifier boundary identifying a subset of data of interest. In other words, a gate is a numerical or graphical boundary that can be used to define the characteristics of particles to include for further analysis. In flow cytometry, a gate may bound a group of events or data points of particular interest. The boundaries of a flow cytometry gate may be defined by a set of vertices or coordinates within the data space of a data set (e.g., the data space of the portion of the flow cytometry data). As used herein, "gating" generally refers to the process of classifying the data using a defined gate for a given set of data, where the gate may be one or more regions of interest combined with Boolean logic. For example, gating may include selecting an area on a scatter or histogram plot generated during a flow cytometer experiment that encompasses particles of a population of interest.

As used herein, an "event" generally refers to the assembled packet of data measured from a single particle, such as cells or synthetic particles. Typically, the data measured from a single particle include a number of parameters, including one or more light scattering parameters and at least one other parameter or feature derived from measured fluorescence. Thus, each event is represented as a vector of parameter measurements. In some embodiments, each measured parameter or feature corresponds to one dimension of the data space. In other embodiments, dimensionality reduction is performed such that one or more dimensions of the data space, or each (i.e., every) dimension of the data space, corresponds to two or more of the measured parameters. In these cases, the dimensionality reduction may be performed using one or more of Principal Component Analysis (PCA), t-distributed Stochastic Neighbor Embedding (t-SNE), Uniform Manifold Approximation and Projection (UMAP), and/or machine learning techniques (e.g., using a trained machine learning model).

As discussed above, embodiments of the methods include identifying a plurality of parameters, each parameter associated with a dimension of a data space of a of a portion of the flow cytometry data. In some embodiments, each parameter is identified automatically using, e.g., lines of computer code and/or rules-based approaches. For example, a plurality of data points included in the portion of the flow cytometry data may be associated with structured or standardized data (e.g., metadata) from which each parameter of each dimension of the data space of the plurality of data points may be readily extracted or identified using, e.g., lines of computer code. In some embodiments, the parameter may be identified automatically from the name of a dimension (e.g., the name of an axis of a scatter plot or histogram) using rules-based approaches.

In some embodiments, the parameter may be identified by comparing a nonreduced data set to a corresponding reduced data set included in the flow cytometry data using, e.g., lines of computer code, rules-based approaches, and/or machine learning approaches. In some cases, the parameter may be identified by a user and, e.g., entered into a computer program configured to perform the subsequent steps of the disclosure. In some instances, each of the one or more parameters of a dimension of the data space are identified. In some cases, all the parameters of the data space (i.e., each of the one or more parameters of each dimension of the data space) are identified. In some embodiments, the gate input is received by a selection on a graphical representation of the data space. In some embodiments, the selection is created by a user using, e.g., an operator input module including a touch screen or a mouse.

### Calculating Parameter Metrics

As described above, embodiments of the methods include calculating a metric for each parameter identified in the data space (e.g., of at least a portion of the plurality of identified parameters) based on a magnitude of the cytometry data associated with the respective parameter's dimension and, e.g., generating a label for the flow cytometry gate input based on at least one metric and a predetermined magnitude threshold associated with the metric (i.e., specific to the metric). In some embodiments, the generated label includes the name of the respective parameter of the metric and an indicator of the magnitude of the parameter determined by comparing the metric and the magnitude threshold. In some embodiments, the generated label includes the name of the parameter, the metric, a symbol associated with the parameter, a symbol associated with the metric, or any combination thereof. In some embodiments, the metric is normalized by the average magnitude of the plurality of parameters. By "average" is meant a number expressing the central or typical value in a set of data, such as, e.g., a mode, median, or mean of a data set, or any combination thereof. In some embodiments, the average is a geometric mean. In some embodiments, the metric is normalized by the sum of the magnitudes of the plurality of parameters. In some embodiments, the method further includes determining if the dimension of the data space is associated with one parameter or a plurality of parameters. In some instances, a geometric approach (i.e., based on the shape and location of a gate or particle population) may be employed to calculate the metric when each dimension of the data space is associated with one parameter, and a data distribution approach (i.e., based on a distribution of gated versus ungated data points) may be employed to calculate the metric when the dimension of the data space is associated with a plurality of parameters.

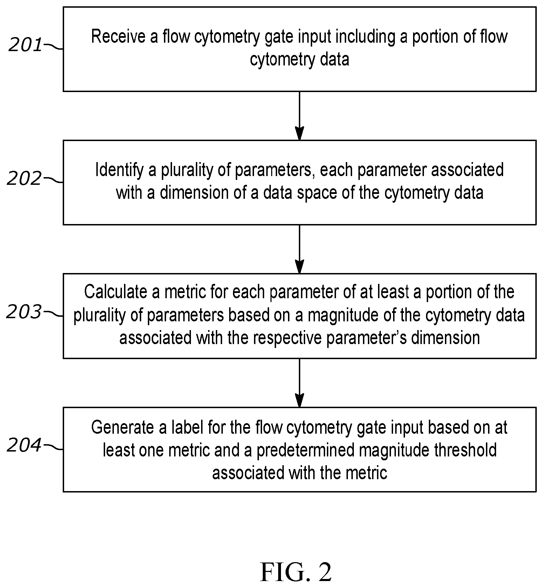

**FIG. 2** depicts a method of labeling flow cytometry data, e.g., by generating a label for a flow cytometry gate input (e.g., as described above). In step **201,** a flow cytometry gate input comprising a portion of the cytometry data (e.g., a portion of a plurality of data points as described above) is received. In step **202,** a plurality of parameters is identified, each parameter associated with a dimension of a data space of the portion of the cytometry data. In step **203,** a metric for each parameter of at least a portion of the plurality of parameters is calculated based on a magnitude of the cytometry data associated with the respective parameter's dimension. In step **204,** a label for the flow cytometry gate input is generated based on at least one metric and a predetermined magnitude threshold associated with the metric. In some cases, a metric is calculated for each of the plurality of parameters and the label is generated based on each metric and a magnitude threshold associated with each metric.

### The Geometric Approach

In certain embodiments, calculating the metric for a parameter may include: determining a ratio between a maximum magnitude of the parameter associated dimension within the portion of the cytometry data and a magnitude of the parameter associated dimension within the entire cytometry data. In these embodiments, each dimension of the data space may be associated with one parameter and, e.g., each dimension may correspond to measurements of a parameter generated using a light detection system of a flow cytometer. In some embodiments, the determined ratio is a percentile of the maximum magnitude (i.e., of the associated dimension within the portion of the cytometry data) within a distribution of the magnitude of the associated dimension within the entire cytometry data. In some embodiments, the largest value of the parameter included in the gate input is the maximum magnitude and, e.g., the ratio quantifies where the maximum magnitude falls within the parameter values of the entire cytometry data. This quantification (i.e., metric) indicates, e.g., if the gate input reflects relatively high or low values of the parameter for the given sample or experiment of the flow cytometry data. In some cases, a relatively high value of the parameter may correspond to or indicate, e.g., the presence of a protein of interest (wherein, e.g., the protein of interest is the parameter).

In some embodiments, generating the label includes comparing the metric with a predetermined magnitude threshold and may include, e.g., determining if the ratio (e.g., percentile of the maximum magnitude) meets or exceeds a predetermined percentile. The predetermined percentile may be any percentile such as, e.g., the 40% percentile, the 50% percentile, the 60% percentile, the 70% percentile, the 80% percentile, the 90% percentile, the 95% percentile, etc. In some embodiments, when the ratio (e.g., percentile of the maximum) is determined not to meet or exceed the predetermined magnitude threshold (e.g., predetermined percentile) the generated label includes a negative indicator of the parameter (e.g., '-'). In other cases, when the ratio (e.g., percentile of the maximum) is determined not to meet or exceed the predetermined magnitude threshold (e.g., predetermined percentile) the generated label does not include information pertaining to the parameter. In some embodiments, when the ratio (e.g., percentile of the maximum) is determined to meet or exceed the predetermined magnitude threshold (e.g., predetermined percentile) the generated label includes a positive indicator of the parameter. In these cases, the generated label may include the name of the parameter and, e.g., the calculated metric or simply a '+' symbol indicating a positive association with the parameter. In some embodiments, the ratio is compared to multiple different ratios in order to generate an indicator of the level of association of the gate with the parameter.

In some embodiments, when employing the geometric approach the method further includes calculating a second metric by: determining a ratio between a minimum magnitude of the parameter associated dimension within the portion of the cytometry data and a magnitude of the parameter associated dimension within the entire cytometry data. In some embodiments, the determined ratio is a percentile of the minimum magnitude (i.e., of the associated dimension within the portion of the cytometry data) within a distribution of the magnitude of the associated dimension within the entire cytometry data. In some embodiments, the smallest value of the parameter included in the gate input is the minimum magnitude and, e.g., the ratio quantifies where the minimum magnitude falls within the parameter values of the entire cytometry data. This quantification (i.e., metric) indicates, e.g., if the gate input reflects relatively high or low values of the parameter for the given sample or experiment of the flow cytometry data. In these cases, the method may further include determining if the ratio of the minimum (e.g., percentile of the minimum magnitude) meets or exceeds a predetermined magnitude threshold (e.g., a predetermined percentile) to generate the label. The predetermined percentile may be any percentile such as, e.g., the 40% percentile, the 50% percentile, the 60% percentile, the 70% percentile, the 80% percentile, the 90% percentile, the 95% percentile, etc. In some embodiments, when the ratio (e.g., percentile) of the minimum is determined to meet or exceed the predetermined magnitude threshold, the generated label includes a strong positive indicator of the parameter (e.g., a '+++' symbol indicating a strong positive association with the parameter). In some embodiments, the ratio of the minimum is compared to multiple different predetermined ratios in order to generate an indicator of the level of association of the gate with the parameter.

In some embodiments, all the parameters of the data space are identified, and the above-described methods of calculating a metric using the geometric approach are performed for each dimension of the data space associated with one parameter. In these cases, the generated label may be a composite of each of the assessed parameters and their respective positive or negative indicators.

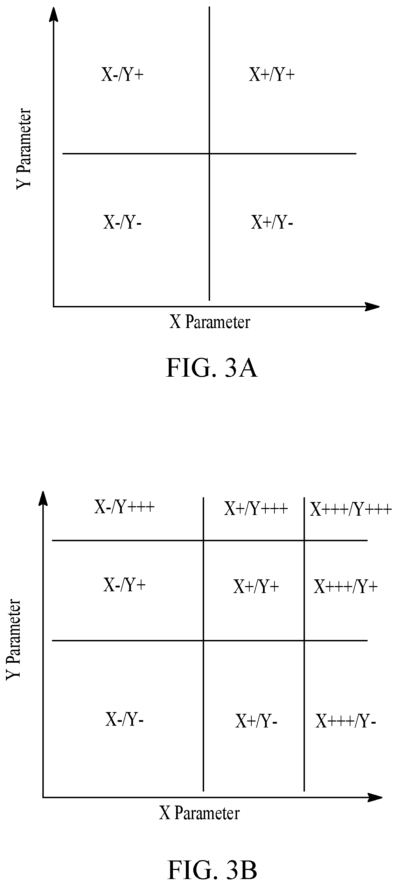

**FIGS. 3A** to **3B** illustrate a method for automatically generating a label for a gate using the geometric approach, e.g., as described above. **FIG. 3A** illustrates how different regions of a two-dimensional data space might indicate a positive or negative association with a parameter depending on where the gate input is located on the plot (e.g., depending on where the maximum X or Y value of the gate and/or the minimum X or Y value of the gate is located on the plot). **FIG. 3B** illustrates how different regions of a two-dimensional data space might indicate a strong positive or negative association with a parameter depending on where the gate input is located on the plot (e.g., depending on where the maximum X or Y value of the gate and/or the minimum X or Y value of the gate input is located on the plot).

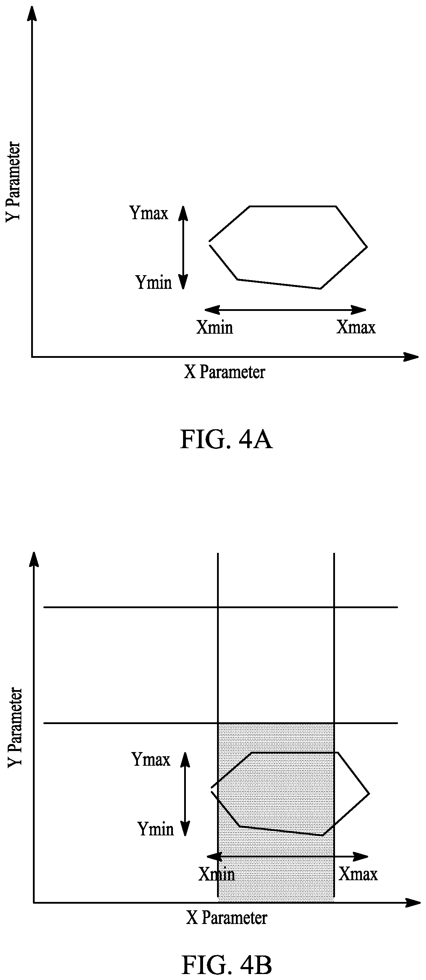

**FIGS. 4A** to **4B** illustrate a method for automatically generating a label for a gate using the geometric approach, e.g., as described above. **FIG. 4A** illustrates the maximum and minimum parameter values of a gate input for both the X parameter and Y parameter. **FIG. 4B** depicts where the maximum and minimum parameter values of the gate input fall with respect to two predetermined thresholds for each parameter (e.g., a predetermined threshold for the minimum magnitude of the parameter and a predetermined threshold for the maximum magnitude of the parameter). In this scenario, the generated gate label may include a positive indicator of the X Parameter and a negative indicator of the Y Parameter (e.g., "X Parameter (+), Y Parameter (-)").

### The Data Distribution Approach

In certain embodiments calculating the metric for a parameter may include: determining a difference between an average magnitude of the parameter associated dimension within the portion of the cytometry data and a magnitude of the parameter associated dimension within the entire of the cytometry data not included within the portion of the cytometry data. In these embodiments, each dimension of the data space may be associated with a plurality of parameters (i.e., the data space may be a dimensionally reduced data space) and, e.g., each dimension may be associated with measurements of a plurality of parameters generated using a light detection system of a flow cytometer. In some embodiments, the average is a mean such as, e.g., a geometric mean. In cases wherein the data space is a dimensionally reduced data space, each magnitude of the parameter associated dimension used to calculate the metric may be associated with only the respective parameter of the metric (i.e., the parameter for which the metric is being calculated). For example, each input parameter used to generate the dimensionally reduced data space (e.g., measurements of every input parameter used by a dimension reduction platform to generate the dimensionally reduced data space) may be included in the flow cytometry data or may be obtained and used to calculate a metric for each respective parameter. In other words, a set of measurements (e.g., dimensionally reduced with measurements of other parameters to generate the dimension values of each of a plurality of data points included in the flow cytometry data) including a measurement of the parameter for the entirety of data points included in the flow cytometry data is used to quantify the average magnitude of the parameter for the portion of the cytometry data and the magnitude (e.g., the average magnitude) of the parameter for the entire of the cytometry data not included within the portion of the cytometry data. The difference between the two quantifications is then taken in order to quantify the magnitude of the difference between the association of the portion of the cytometry data with the parameter and the association of the entire of the cytometry data not included within the portion of the cytometry data with the parameter. This quantification/metric indicates, e.g., if the gate input can be differentiated from the ungated data points of the flow cytometry data using the parameter.

In some embodiments, the average magnitude, and the magnitude of the entirety of the cytometry data not included within the portion of the cytometry data are geometric means. In some embodiments, comparing the metric with a predetermined magnitude threshold may include determining if the difference meets or exceeds a predetermined value. In these cases, the generated label may include a negative indicator of the parameter when the difference is determined not to meet or exceed the predetermined value, and a positive indicator of the parameter when the difference is determined to meet or exceed the predetermined value. In other instances, the generated label may include a negative indicator of the parameter when the difference is determined to be below a predetermined negative value, a positive indicator of the parameter when the difference is determined to meet or exceed a predetermined positive value, and no indicator of the parameter when the difference is relatively small (i.e., the difference is in between the predetermined negative value and the predetermined positive value).

In some embodiments, the method further includes obtaining each input parameter used to generate a dimensionally reduced data space (i.e., a data set of parameter measurements for each input parameter used by a dimension reduction platform to generate the dimensionally reduced data space). In some embodiments, lines of computer code and/or rules-based approaches may be used to identify and obtain each input parameter (e.g., including measurements of each input parameter for each of a plurality of data points included in the flow cytometry data).

In some embodiments, all the parameters of the dimension are identified, and the above-described methods of the data distribution approach are performed for each parameter of the data space associated with the dimension. In some embodiments, all the parameters of the data space are identified, and the above-described methods of the data distribution approach are performed for each parameter of each dimension of the data space associated with a plurality of parameters (and, e.g., the above-described methods of the geometric approach are performed for each dimension of the data space associated with one parameter). In some cases, the generated label may be a composite of each of the assessed parameters (i.e., each parameter metric) and their respective positive or negative indicators.

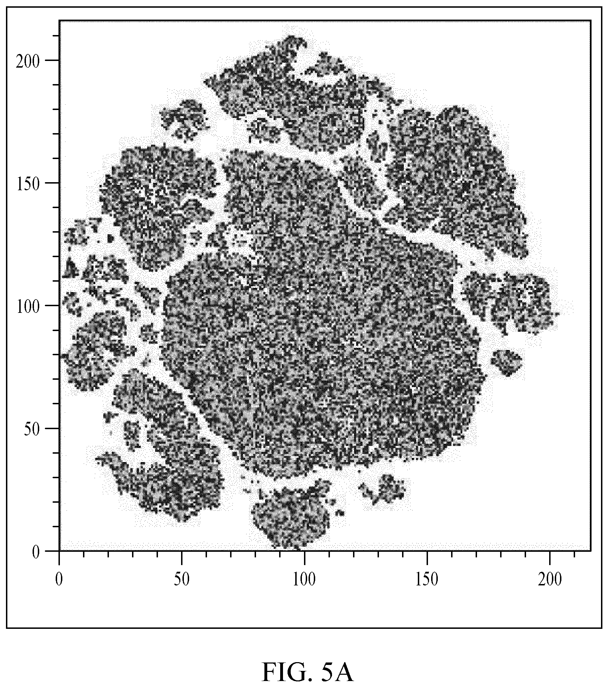

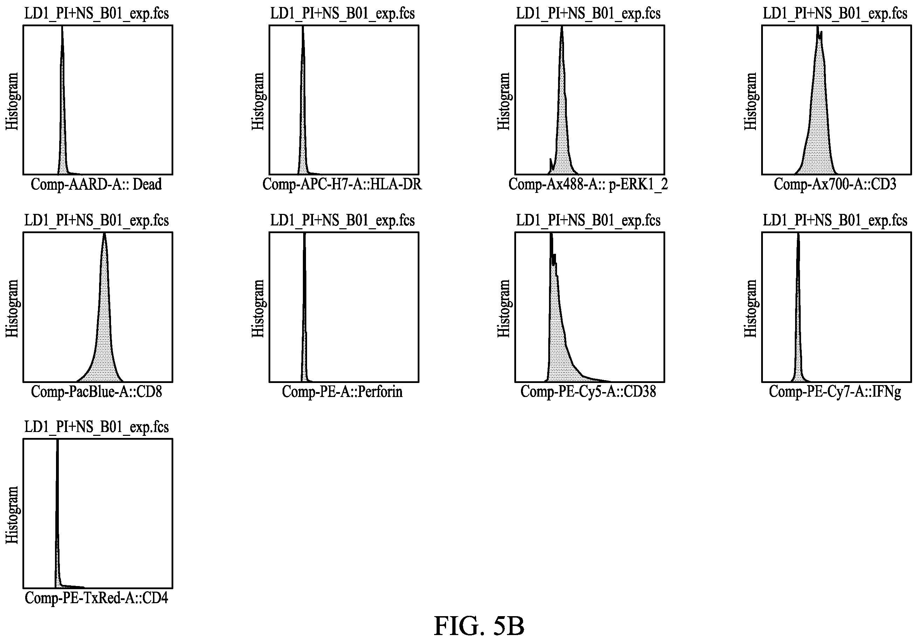

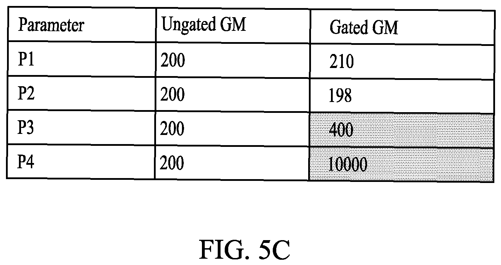

**FIGS. 5A** to **5C** illustrate a method for automatically generating a label for a gate input using the data distribution approach, e.g., as described above. **FIG. 5A** illustrates a scatter plot with dimensionally reduced axes (i.e., axes each corresponding to a plurality of measured parameters). **FIG. 5B** depicts data sets of the parameter for gate input data points or data points not included within the gate input (i.e., ungated data points) in the form of histograms. **FIG. 5C** provides calculated geometric means for the gate input and the ungated data points. In this scenario, the generated gate label may include a positive indicator of the P3 Parameter the P4 Parameter (e.g., "P3 (+), P4 (+)").

### Determining Parameter Thresholds and Generating Gate Labels

As described above, embodiments of the methods include comparing the metric (calculated, e.g., as described above) with a predetermined magnitude threshold (e.g., as described above) to generate a label for the gate. In some embodiments, the methods of the disclosure further include determining the magnitude threshold. In some cases, the magnitude threshold may be determined by a user and, e.g., entered into a computer program configured to perform the subsequent steps of the disclosure.

In some embodiments, the magnitude threshold is determined automatically using, e.g., lines of computer code and/or rules-based approaches. For example, the magnitude threshold may be automatically determined based on one or more magnitude thresholds of past experiments having similar or the same measured parameters. In some embodiments, the magnitude threshold is determined automatically using, e.g., a trained machine learning model. In these cases, the machine learning model may be trained using one or more past experiment magnitude thresholds. In some embodiments, a plurality of magnitude thresholds are determined. A user may then be prompted to select one of the determined magnitude thresholds. In other instances, a plurality of labels are generated using the plurality of determined magnitude thresholds and, e.g., the user is prompted to select one or more of the generated gate input labels to associate with the gate. In some instances, three or more gate input labels automatically generated using three or more automatically determined thresholds are displayed for a user along with the thresholds corresponding to each automatically generated label.

In some embodiments, a user may be prompted to associate a generated label with a gate input. For example, a user may be prompted save the name of the gate or gate input as the generated label. In other instances, a user may be prompted save a generated label as metadata associated with the gate or gate input. The metadata may be structured and, e.g., may be used for future data analysis (such as, e.g., to train a machine learning model). In some cases, a generated label is automatically saved as metadata associated with the gate input. In some embodiments, the method further includes displaying a confirmation prompt based on the generated label. In some embodiments, the method further includes displaying a prompt to edit the name of the generated label.

In some embodiments, the generated label includes the name of each assessed parameter and an indicator of the magnitude of each parameter determined by comparing each metric and each corresponding magnitude threshold. Some proteins detected by flow cytometry have a variable density of expression over maturation or activation states of the cell, or cell lineages. This density distinction may be important to biologists. For example, CD4 dimly positive cells (monocytes) have a vastly different function from CD4 bright cells (helper T lymphocytes). As such, in some embodiments the indicator of the magnitude of each parameter may be indicative of two or more levels of the parameter for the gate input. For example, there may be two or more different indicators reflecting two or more different magnitudes of positive association (e.g., two or more different levels of brightness) and/or two or more different magnitudes of negative association. In some embodiments, a user may adjust one or more of the conventions used for label generation. For example, a user may adjust the number of indicators used and/or the symbols of the indicators themselves based on personal preference. In some cases, the methods are implemented using a computer program and, e.g., a drop-down menu is provided for quick (e.g., real time) adjustment of the labelling conventions used to generate and suggest gate labels.

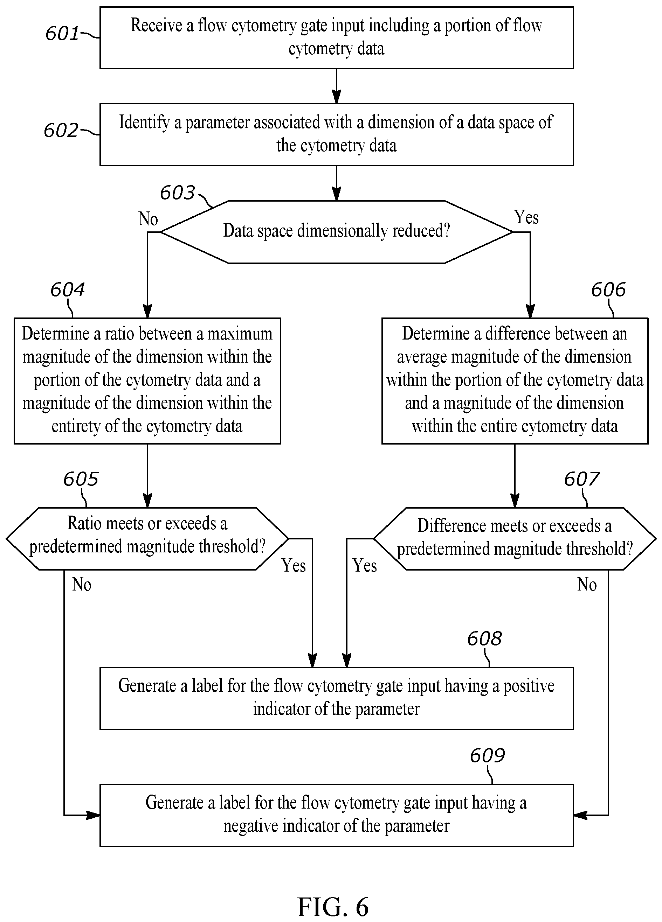

**FIG. 6** depicts a method of labeling flow cytometry data, e.g., by generating a label for a flow cytometry gate input (e.g., as described above), using either a geometric approach or a data distribution approach according to certain embodiments. In step **601,** a flow cytometry gate input comprising a portion of the cytometry data (e.g., a portion of a plurality of data points as described above) is received. In step **602,** a parameter associated with a dimension of a data space of the portion of the cytometry data is identified. In step **603,** a determination is made as to whether or not the data space is a dimensionally reduced data space. If the data space is not dimensionally reduced, a metric for the parameter is calculated using the geometric approach by determining a ratio between a maximum magnitude of the dimension within the portion of the cytometry data and a magnitude of the dimension within the entirety of the cytometry data (step **604).** In step **605,** a determination is made as to whether or not the ratio meets or exceeds a predetermined magnitude threshold in order to generate a label for the flow cytometry gate (steps **608** or **609).** If the data space is dimensionally reduced, a metric for the parameter is calculated using the data distribution approach by determining a difference between an average magnitude of the dimension within the portion of the cytometry data and a magnitude of the dimension within the entire cytometry data (step **606).** In step **607,** a determination is made as to whether or not the difference meets or exceeds a predetermined magnitude threshold in order to generate a label for the flow cytometry gate (steps **608** or **609).**

### Flow Cytometry Methods

In some embodiments, the method further includes obtaining the flow cytometry gate input (including, e.g., a set of vertices for the gate) and/or the plurality of data points as described above. In some embodiments, the gate input is obtained from a user, wherein the user manually draws the gate around a particle/cell population displayed, e.g., on a two-dimensional scatter plot in order to create a gate input. In these cases, the drawing may be performed using a computer configured to perform the methods of the disclosure, e.g., as described above. In some embodiments, the flow cytometry gate input is automatically determined using, e.g., automated gating methods described in, for example, U.S. Pat. Nos. 4,845,653; 5,627,040; 5,739,000; 5,795,727; 5,962,238; 6,014,904; and 6,944,338; and U.S. Pat. Pub. No. 2012/0245889, each incorporated herein by reference.

In some embodiments, the flow cytometry data is obtained by generating a measurement of one or more parameters for each data point of a plurality of data points included in the flow cytometry data using a light detection system of a flow cytometer. In some embodiments, the obtaining includes performing dimensionality reduction on the measurements of two or more parameters. In these cases, the dimensionality reduction may be performed using one or more of Principal Component Analysis (PCA), t-distributed Stochastic Neighbor Embedding (t-SNE), Uniform Manifold Approximation and Projection (UMAP), and a machine learning model. Methods in certain embodiments include data acquisition, analysis, and recording, such as with a computer, wherein multiple data channels record data from each detector for the light scatter and fluorescence emitted by each particle of a sample (e.g., corresponding to each data point) as it passes through the sample interrogation region of a flow cytometer.

In some instances, the sample used to generate the flow cytometry data in the instant methods is a biological sample (e.g., a sample including eukaryotic cells and/or prokaryotic cells). The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient parameter (e.g., cell surface marker or antigen) that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In certain embodiments, the flow cytometry data is obtained by performing a flow cytometric protocol. In practicing such methods, a sample (e.g., as described above) in a flow stream of a flow cytometer is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

In other embodiments, methods of embodiments of the disclosure include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the methods include irradiating the flow stream with a dye laser, such as a stilbene, coumarin or rhodamine laser. In yet other instances, methods include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, methods include irradiating the flow stream with a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g., laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the sample is sequentially irradiated with two or more light sources, the duration the sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where the sample is sequentially irradiated by more than two (i.e., 3 or more) light sources, the delay between irradiation by each light source may be the same or different.

The sample may be irradiated continuously or in discrete intervals. In some instances, methods include irradiating the sample with the light source continuously. In other instances, the sample is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In certain instances, the sample may be irradiated with a plurality of angularly deflected beams of frequency-shifted light and a cell in the flow stream is imaged by fluorescence imaging using radiofrequency tagged emission (FIRE) to generate a frequency-encoded image, such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894 the disclosures of which are herein incorporated by reference.

In embodiments, light from the irradiated sample is conveyed to a light detection system and measured by one or more photodetectors. In practicing the subject methods, light from the sample is conveyed to three or more wavelength separators that are each configured to pass light having a predetermined spectral range. The spectral ranges of light from each of the wavelength separators are conveyed to one or more light detection modules having optical components that are configured to convey light having a predetermined sub-spectral range to the photodetectors.

Light may be measured with the light detection systems continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In certain embodiments, the light propagation is measured 2 or more times, with the data in certain instances being averaged.

In some embodiments, methods include adjusting the light before detecting the light with the subject light detection systems. For example, the light from the sample may be passed through one or more lenses, mirrors, pinholes, slits, gratings, light refractors, and any combination thereof. In some instances, the collected light is passed through one or more focusing lenses, such as to reduce the profile of the light directed to the light detection system or optical collection system as described above. In other instances, the emitted light from the sample is passed through one or more collimators to reduce light beam divergence conveyed to the light detection system.

### SYSTEMS

Aspects of the present disclosure further include systems, such as computer-controlled systems, for practicing embodiments of the above methods. Aspects of the systems include: a flow cytometer configured to produce flow cytometry data (e.g., a plurality of parameter measurements for a plurality of particles of a biological sample); and a processor including memory operably coupled to the processor wherein the memory includes instructions stored thereon, which when executed by the processor, cause the processor to: receive a flow cytometry gate input comprising a portion of the flow cytometry data; identify a plurality of parameters, each parameter associated with a dimension of a data space of the portion of the flow cytometry data; calculate a metric for each parameter of at least a portion of the plurality of parameters based on a magnitude of the flow cytometry data associated with the respective parameter's dimension; and generate a label for the flow cytometry gate input based on at least one metric and a predetermined magnitude threshold associated with the metric. In some embodiments, the generated label includes the name of the parameter and an indicator of the magnitude of the parameter determined using the comparison of the metric and the magnitude threshold.

In some embodiments, the processor includes instructions stored thereon, which when executed by the processor, further cause the processor to determine if the dimension of the data space is associated with one parameter or a plurality of parameters. In some instances, the dimension is determined to be associated with one parameter and, e.g., the metric is calculated by: determining a ratio between a maximum magnitude of the associated dimension within the portion of the cytometry data and a magnitude of the associated dimension within the entire cytometry data. In some instances, the dimension is determined to be associated with a plurality of parameters and, e.g., the metric is calculated by: determining a difference between an average magnitude of the associated dimension within the portion of the cytometry data and a magnitude of the associated dimension within the entire cytometry data.

In some embodiments, the system further includes operator input devices configured to receive input from a user. In some embodiments, the processor includes instructions stored thereon, which when executed by the processor, further cause the processor to associate the gate with the generated gate label (e.g., by saving the name of the gate as the generated label) based on the input received from the user. In some embodiments, the processor may be configured to automatically perform the above-described label generating methods. In some instances the systems further include one or more computers for complete automation or partial automation of the methods described herein. In some embodiments, systems include a computer having a computer readable storage medium with a computer program stored thereon.

In embodiments, the system includes an input module, a processing module, and an output module. The subject systems may include both hardware and software components, where the hardware components may take the form of one or more platforms, e.g., in the form of servers, such that the functional elements, i.e., those elements of the system that carry out specific tasks (such as managing input and output of information, processing information, etc.) of the system may be carried out by the execution of software applications on and across the one or more computer platforms represented of the system.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low-level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random-access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described including a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra-Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touchscreen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone, or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located, or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

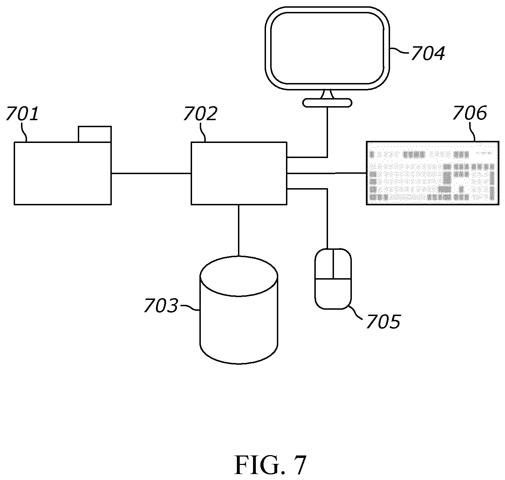

**FIG. 7** shows a functional block diagram for one example of a flow cytometer control system, such as a processor **702,** for analyzing and displaying biological events. A processor **702** can be configured to implement a variety of processes for controlling graphic display of biological events.

A flow cytometer or sorting system **701** can be configured to acquire biological event data. For example, a flow cytometer can generate flow cytometric event data. The flow cytometer **701** can be configured to provide biological event data to the processor **702.** A data communication channel can be included between the flow cytometer or sorting system **701** and the processor **702.** The biological event data can be provided to the processor **702** via the data communication channel.

The processor **702** can be configured to receive biological event data from the flow cytometer or sorting system **701.** The biological event data received from the flow cytometer or sorting system **701** can include flow cytometric event data. The processor **702** can be configured to provide a graphical display including a first plot of biological event data to a display device **704.** The processor **702** can be further configured to render a region of interest as a gate around a population of biological event data shown by the display device **704,** overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The processor **702** can be further configured to display the biological event data on the display device **704** within the gate differently from other events in the biological event data outside of the gate. For example, the processor **702** can be configured to render the color of biological event data contained within the gate to be distinct from the color of biological event data outside of the gate. The display device **704** can be implemented as a monitor, a tablet computer, a smartphone, or other electronic device configured to present graphical interfaces.

The processor **702** can be configured to receive a gate selection signal identifying the gate from a first input device. For example, the first input device can be implemented as a mouse **705.** The mouse **705** can initiate a gate selection signal to the processor **702** identifying the gate to be displayed on or manipulated via the display device **704** (e.g., by clicking on or in the desired gate when the cursor is positioned there). In some implementations, the first device can be implemented as the keyboard **706** or other means for providing an input signal to the processor **702** such as a touchscreen, a stylus, an optical detector, or a voice recognition system. Some input devices can include multiple inputting functions. In such implementations, the inputting functions can each be considered an input device. For example, as shown in **FIG. 7****,** the mouse **705** can include a right mouse button and a left mouse button, each of which can generate a triggering event. The triggering event can cause the processor **702** to alter the manner in which the data is displayed, which portions of the data is actually displayed on the display device **704,** and/or provide input to further processing such as selection of a population of interest for particle sorting.

In some embodiments, the processor **702** can be configured to detect when gate selection is initiated by the mouse **705.** The processor **702** can be further configured to automatically modify plot visualization to facilitate the gating process. The modification can be based on the specific distribution of biological event data received by the processor **702.**

The processor **702** can be connected to a storage device **703.** The storage device **703** can be configured to receive and store biological event data from the processor **702.** The storage device **703** can also be configured to receive and store flow cytometric event data from the processor **702.** The storage device **703** can be further configured to allow retrieval of biological event data, such as flow cytometric event data, by the processor **702.**

A display device **704** can be configured to receive display data from the processor **702.** The display data can include plots of biological event data and gates outlining sections of the plots. The display device **704** can be further configured to alter the information presented according to input received from the processor **702** in conjunction with input from the flow cytometer **701,** the storage device **703,** the keyboard **706,** and/or the mouse **705.**

In some implementations, the processor **702** can generate a user interface to receive example events for sorting. For example, the user interface can include a control for receiving example events or example images. The example events or images or an example gate can be provided prior to collection of event data for a sample, or based on an initial set of events for a portion of the sample.

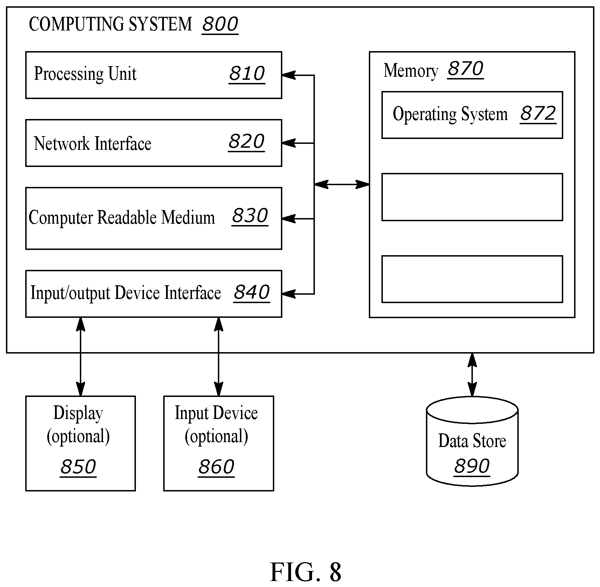

**FIG. 8** depicts a general architecture of an example computing device **800** according to certain embodiments. The general architecture of the computing device **800** depicted in **FIG. 8** includes an arrangement of computer hardware and software components. It is not necessary, however, that all of these generally conventional elements be shown in order to provide an enabling disclosure. As illustrated, the computing device **800** includes a processing unit **810,** a network interface **820,** a computer readable medium drive **830,** an input/output device interface **840,** a display **850,** and an input device **860,** all of which may communicate with one another by way of a communication bus. The network interface **820** may provide connectivity to one or more networks or computing systems. The processing unit **810** may thus receive information and instructions from other computing systems or services via a network. The processing unit **810** may also communicate to and from memory **870** and further provide output information for an optional display **850** via the input/output device interface **840.** For example, an analysis software (e.g., data analysis software or program such as FlowJo^{®}) stored as executable instructions in the non-transitory memory of the analysis system can display the flow cytometry event data to a user. The input/output device interface **840** may also accept input from the optional input device **860,** such as a keyboard, mouse, digital pen, microphone, touch screen, gesture recognition system, voice recognition system, gamepad, accelerometer, gyroscope, or other input device.

The memory **870** may contain computer program instructions (grouped as modules or components in some embodiments) that the processing unit **810** executes in order to implement one or more embodiments. The memory **870** generally includes RAM, ROM and/or other persistent, auxiliary, or non-transitory computer-readable media. The memory **870** may store an operating system **872** that provides computer program instructions for use by the processing unit **810** in the general administration and operation of the computing device **800.** Data may be stored in data storage device **890.** The memory **870** may further include computer program instructions and other information for implementing aspects of the present disclosure.

In some embodiments, the system includes a particle analyzer. In certain embodiments, the particle analyzer is a flow cytometer. Flow cytometers of interest may include a flow cell for transporting particles in a flow stream, a light source for irradiating the particles in the flow stream at an interrogation point, and a particle-modulated light detector for detecting particle-modulated light. In some cases, the flow cytometer is a full spectrum flow cytometer.

As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample injected from a sample tube. Flow cells of interest include a light-accessible flow channel. In some instances, the flow cell includes transparent material (e.g., quartz) that permits the passage of light therethrough. In some embodiments, the flow cell is a stream-in-air flow cell in which light interrogation of the particles occurs outside of the flow cell (i.e., in free space).

In some cases, the flow stream is configured for irradiation with light from a light source at an interrogation point. The flow stream for which the flow channel is configured may include a liquid sample injected from a sample tube. In certain embodiments, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 µm represents the axis of light emitted by the light source, the interrogation point may range from -100 µm to 100 µm, such as -50 µm to 50 µm, such as -25 µm to 40 µm, and including -15 µm to 30 µm.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

As discussed above, aspects of the disclosure also include a light source configured to irradiate particles passing through the flow cell at an interrogation point. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols, and combinations thereof. In certain embodiments, flow cytometers of interest include one or more focusing lenses. The focusing lens, in one example, may be a de-magnifying lens. In still other embodiments, flow cytometers of interest include fiber optics.

Where the optical adjustment component is configured to move, the optical adjustment component may be configured to be moved continuously or in discrete intervals, such as for example in 0.01 µm or greater increments, such as 0.05 µm or greater, such as 0.1 µm or greater, such as 0.5 µm or greater such as 1 µm or greater, such as 10 µm or greater, such as 100 µm or greater, such as 500 µm or greater, such as 1 mm or greater, such as 5 mm or greater, such as 10 mm or greater and including 25 mm or greater increments.

Any displacement protocol may be employed to move the optical adjustment component structures, such as coupled to a moveable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90-degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser, and a 635 nm laser.

As discussed above, flow cytometers of interest may further include one or more particle-modulated light detectors for detecting particle-modulated light intensity data. In some embodiments, the particle-modulated light detector(s) include one or more forward-scattered light detectors configured to detect forward-scattered light. For example, the subject flow cytometers may include 1 forward-scattered light detector or multiple forward-scattered light detectors, such as 2 or more, such as 3 or more, such as 4 or more, and including 5 or more. In certain embodiments, flow cytometers include 1 forward-scattered light detector. In other embodiments, flow cytometers include 2 forward-scattered light detectors.

Any convenient detector for detecting collected light may be used in the forward-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In additional embodiments, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device, and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the flow cytometers as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, flow cytometers may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In some embodiments, flow cytometers include one or more wavelength separators positioned between the flow cell and the particle-modulated light detector(s). The term "wavelength separator" is used herein in its conventional sense to refer to an optical component that is configured to separate light collected from the sample into predetermined spectral ranges. In some embodiments, flow cytometers include a single wavelength separator. In other embodiments, flow cytometers include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6BD, FACSDiscover^{™} S8 Cell Sorter cell sorter or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In certain instances, flow cytometry systems of the disclosure are configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894 the disclosures of which are herein incorporated by reference. In such instances, flow cytometric data may include image data of particles, e.g., cells present in the sample. See, e.g., Schraivogel et al., Science Vol. 375(6578); 315-320 (2022), the disclosure of which is incorporated herein in its entirety, as well as U.S. Provisional Patent Application Serial No. 63/256,974, ), the disclosure of which is incorporated herein in its entirety. An example of such a system is FACSDiscover^{™} S8 Cell Sorter cell sorter.

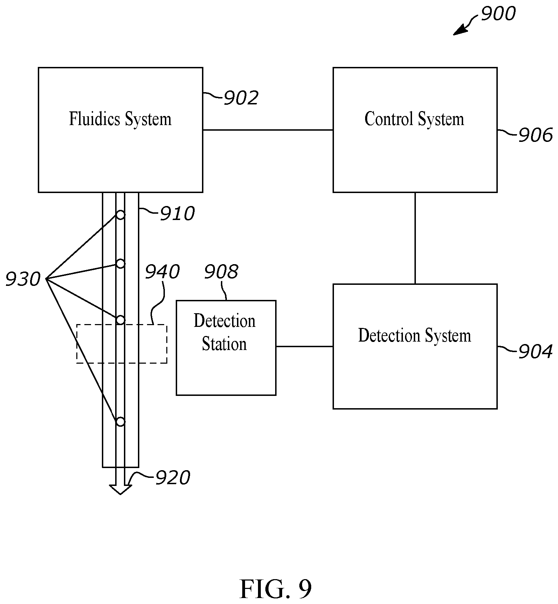

In some embodiments, systems are flow cytometers where the flow cytometry system **900 (****FIG. 9****)** can be used to analyze and characterize particles, with or without physically sorting the particles into collection vessels. **FIG. 9** shows a functional block diagram of a flow cytometry system for computational based sample analysis and particle characterization. In some embodiments, the flow cytometry system **900** is a flow system. The flow cytometry system **900** shown in **FIG. 9** can be configured to perform, in whole or in part, the methods described herein. The flow cytometry system **900** includes a fluidics system **302.** The fluidics system **902** can include or be coupled with a sample tube **910** and a moving fluid column within the sample tube in which particles **930** (e.g., cells) of a sample move along a common sample path **920.**

The flow cytometry system **900** includes a detection system **904** configured to collect a signal from each particle as it passes one or more detection stations along the common sample path. A detection station **908** generally refers to a monitored area **940** of the common sample path. Detection can, in some implementations, include detecting light or one or more other properties of the particles **930** as they pass through the monitored area **940.** In **FIG. 9****,** one detection station **908** with one monitored area **940** is shown. Some implementations of the flow cytometry system **900** can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system **904** is configured to collect a succession of such data points in a first-time interval.

The flow cytometry system **900** can also include a control system **906.** The control system **906** can include one or more processors, an amplitude control circuit and/or a frequency control circuit. The control system shown can be operationally associated with the fluidics system **902.** The control system can be configured to generate a calculated signal frequency for at least a portion of the first-time interval based on a Poisson distribution and the number of data points collected by the detection system **904** during the first time interval. The control system **906** can be further configured to generate an experimental signal frequency based on the number of data points in the portion of the first time interval. The control system **906** can additionally compare the experimental signal frequency with that of a calculated signal frequency or a predetermined signal frequency.

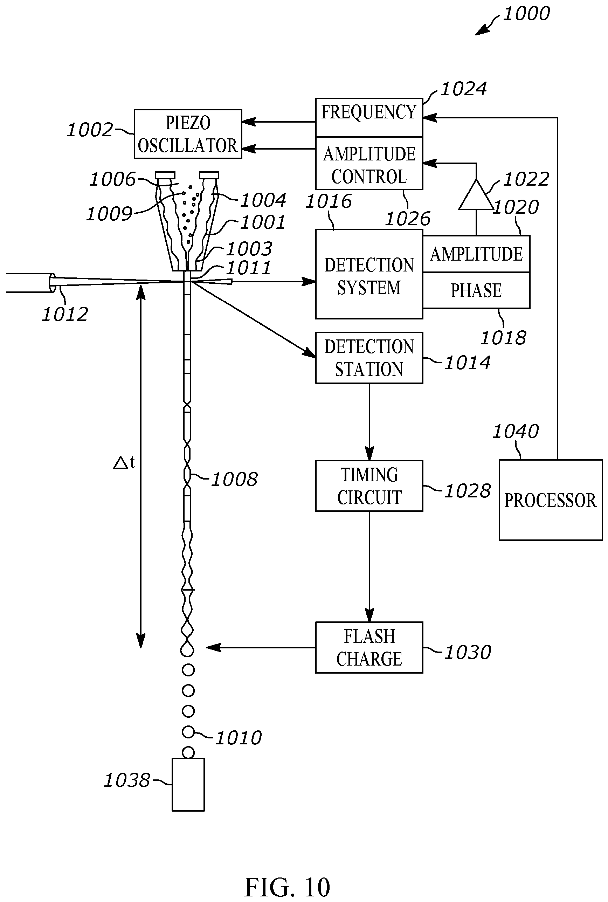

**FIG. 10** is a schematic drawing of a particle sorter system **1000** (e.g., a sorting system of a flow cytometer) in accordance with one embodiment presented herein. In some embodiments, the particle sorter system **1000** is a cell sorter system. As shown in **FIG. 10****,** a drop formation transducer **1002** (e.g., piezo-oscillator) is coupled to a fluid conduit **1001,** which can be coupled to, can include, or can be, a nozzle **1003.** Within the fluid conduit **1001,** sheath fluid **1004** hydrodynamically focuses a sample fluid **1006** including particles **1009** into a moving fluid column **1008** (e.g., a stream). Within the moving fluid column **1008,** particles **1009** (e.g., cells) are lined up in single file to cross a monitored area **1011** (e.g., where laser-stream intersect), irradiated by an irradiation source **1012** (e.g., a laser). Vibration of the drop formation transducer **1002** causes moving fluid column **1008** to break into a plurality of drops **1010,** some of which contain particles **1009.**

In operation, a detection station **1014** (e.g., an event detector) identifies when a particle of interest (or cell of interest) crosses the monitored area **1011.** Detection station **1014** feeds into a timing circuit **1028,** which in turn feeds into a flash charge circuit **1030.** At a drop break off point, informed by a timed drop delay (Δt), a flash charge can be applied to the moving fluid column **1008** such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 10****,** the drops can be collected in a drain receptacle **1038.**

A detection system **1016** (e.g., a drop boundary detector) serves to automatically determine the phase of a drop drive signal when a particle of interest passes the monitored area **1011.** An exemplary drop boundary detector is described in U.S. Pat. No. 7,679,039, which is incorporated herein by reference in its entirety. The detection system **1016** allows the instrument to accurately calculate the place of each detected particle in a drop. The detection system **1016** can feed into an amplitude signal **1020** and/or phase **1018** signal, which in turn feeds (via amplifier **1022)** into an amplitude control circuit **1026** and/or frequency control circuit **1024.** The amplitude control circuit **1026** and/or frequency control circuit **1024,** in turn, controls the drop formation transducer **1002.** The amplitude control circuit **1026** and/or frequency control circuit **1024** can be included in a control system.

In some implementations, sort electronics (e.g., the detection system **1016,** the detection station **1014** and a processor **1040)** can be coupled with a memory configured to store the detected events and a sort decision based thereon. The sort decision can be included in the event data for a particle. In some implementations, the detection system **1016** and the detection station **1014** can be implemented as a single detection unit or communicatively coupled such that an event measurement can be collected by one of the detection system **1016** or the detection station **1014** and provided to the non-collecting element.

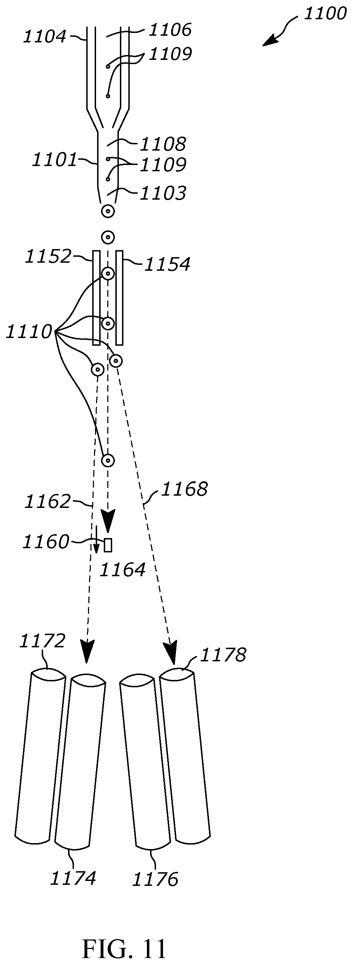

**FIG. 11** is a schematic drawing of a particle sorter system, in accordance with one embodiment presented herein. The particle sorter system **1100** shown in **FIG. 11****,** includes deflection plates **1152** and **1154.** A charge can be applied via a stream-charging wire in a barb. This creates a stream of droplets **1110** containing particles **1110** for analysis. The particles can be illuminated with one or more light sources (e.g., lasers) to generate light scatter and fluorescence information. The information for a particle is analyzed such as by sorting electronics or other detection system (not shown in **FIG. 11****).** The deflection plates **1152** and **1154** can be independently controlled to attract or repel the charged droplet to guide the droplet toward a destination collection receptacle (e.g., one of **1172, 1174, 1176,** or **1178).** As shown in **FIG. 10****,** the deflection plates **1152** and **1154** can be controlled to direct a particle along a first path **1162** toward the receptacle **1174** or along a second path **1168** toward the receptacle **1178.** If the particle is not of interest (e.g., does not exhibit scatter or illumination information within a specified sort range), deflection plates may allow the particle to continue along a flow path **1164.** Such uncharged droplets may pass into a waste receptacle such as via aspirator **1170.**

The sorting electronics can be included to initiate collection of measurements, receive fluorescence signals for particles, and determine how to adjust the deflection plates to cause sorting of the particles. Example implementations of the embodiment shown in **FIG. 11** include the BD FACSAria^{™} line of flow cytometers commercially provided by Becton, Dickinson and Company (Franklin Lakes, NJ).

In some embodiments, particle sorting systems of interest are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, the disclosure of which is incorporated herein by reference. In some embodiments, the subject systems include a particle sorting module having deflector plates, such as described in U.S. Patent Publication No. 2017/0299493, filed on March 28, 2017, the disclosure of which is incorporated herein by reference.

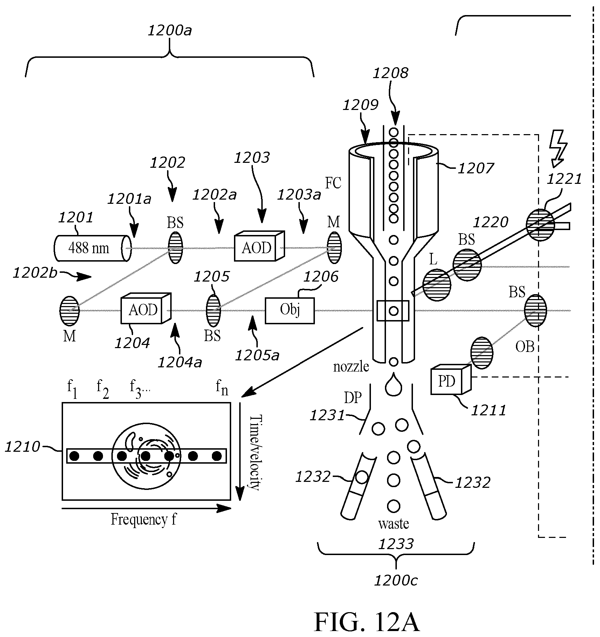

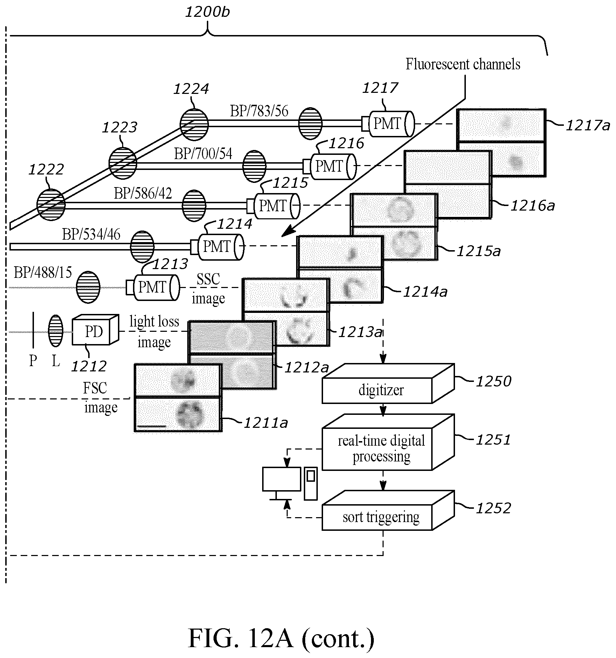

In certain embodiments, systems include a fluorescence imaging using radiofrequency tagged emission image-enabled particle sorter, such as depicted in **FIG. 12A****.** Particle sorter **1200** includes a light irradiation component **1200a** which includes light source **1201** (e.g., 488 nm laser) which generates output beam of light **1201a** that is split with beamsplitter **1202** into beams **1202a** and **1202b.** Light beam **1202a** is propagated through acousto-optic device (e.g., an acousto-optic deflector, AOD) **1203** to generate an output beam **1203a** having one or more angularly deflected beams of light. In some instances, output beam **1203a** generated from acousto-optic device **1203** includes a local oscillator beam and a plurality of radiofrequency comb beams. Light beam **1202b** is propagated through acousto-optic device (e.g., an acousto-optic deflector, AOD) **1204** to generate an output beam **1204a** having one or more angularly deflected beams of light. In some instances, output beam **1204a** generated from acousto-optic device **1204** includes a local oscillator beam and a plurality of radiofrequency comb beams. Output beams **1203a** and **1204a** generated from acousto-optic devices **1203** and **1204,** respectively are combined with beamsplitter **1205** to generate output beam **1205a** which is conveyed through an optical component **1206** (e.g., an objective lens) to irradiate particles in flow cell **1207.** In certain embodiments, acousto-optic device **1203** (AOD) splits a single laser beam into an array of beamlets, each having different optical frequency and angle. Second AOD **1204** tunes the optical frequency of a reference beam, which is then overlapped with the array of beamlets at beam combiner **1205.** In certain embodiments, the light irradiation system having a light source and acousto-optic device can also include those described in Schraivogel, et al. ("High-speed fluorescence image-enabled cell sorting," Science (2022), 375 (6578): 305-320) and United States Patent Publication No. 2021/0404943, the disclosure of which is herein incorporated by reference.

Output beam **1205a** irradiates sample particles **1208** propagating through flow cell **1207** (e.g., with sheath fluid **1209)** at irradiation region **1210.** As shown in irradiation region **1210,** a plurality of beams (e.g., angularly deflected radiofrequency shifted beams of light depicted as dots across irradiation region **1210)** overlaps with a reference local oscillator beam (depicted as the shaded line across irradiation region **1210).** Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system **1200b** that includes a plurality of photodetectors. Light detection system **1200b** includes forward scattered light photodetector **1211** for generating forward scatter images **1211a** and a side scattered light photodetector **1212** for generating side scatter images **1212a.** Light detection system **1200b** also includes brightfield photodetector **1213** for generating light loss images **1213a.** In some embodiments, forward scatter detector **1211** and side scatter detector **1212** are photodiodes (e.g., avalanche photodiodes, APDs). In some instances, brightfield photodetector **1213** is a photomultiplier tube (PMT). Fluorescence from the irradiated sample is also detected with fluorescence photodetectors **1214-1217.** In some instances, photodetectors **1214-1217** are photomultiplier tubes. Light from the irradiated sample is directed to the side scatter detection channel **1212** and fluorescence detection channels **1214-1217** through beamsplitter **1220.** Light detection system **1200b** includes bandpass optical components **1221, 1222, 1223** and **1224** (e.g., dichroic mirrors) for propagating predetermined wavelength of light to photodetectors **1214-1217.** In some instances, optical component **1221** is a 534 nm/40 nm bandpass. In some instances, optical component **1222** is a 586 nm/42 nm bandpass. In some instances, optical component **1223** is a 700 nm/54 nm bandpass. In some instances, optical component **1224** is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels **1211** and **1212,** brightfield light detection channel **1213** and fluorescence detection channels **1214-1217** are processed by real-time digital processing with processors **1250** and **1251.** Images **1211a-1217a** can be generated in each light detection channel based on the data signals generated in processors **1250** and **1251.** Image-enabled sorting is performed in response to a sort signal generated in sort trigger **1252.** Sorting component **1200c** includes deflection plates **1231** for deflecting particles into sample containers **1232** or to waste stream **1233.** In some instances, sort component **1200c** is configured to sort particles with an enclosed particle sorting module, such as those described in U.S. Patent Publication No. 2017/0299493, filed on March 28, 2017, the disclosure of which is incorporated herein by reference. In certain embodiments, sorting component **1200c** includes a sort decision module having a plurality of sort decision units, such as those described in U.S. Patent Publication No. 2020/0256781, the disclosure of which is incorporated herein by reference.

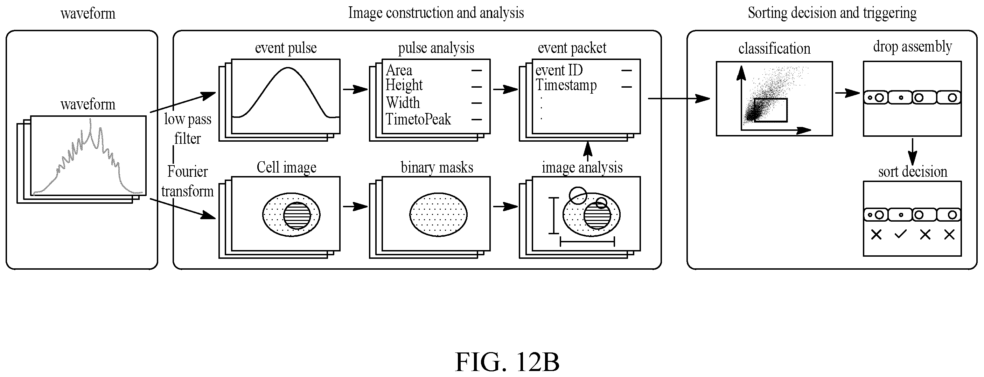

**Figure 12B** depicts image-enabled particle sorting data processing according to certain embodiments. In some instances, image-enabled particle sorting data processing is a low-latency data processing pipeline. Each photodetector produces a pulse with high-frequency modulations encoding the image (waveform). Fourier analysis is performed to reconstruct the image from the modulated pulse. An image processing pipeline produces a set of image features (image analysis), which are combined with features derived from a pulse processing pipeline (event packet). Real-time sort classification electronics then classify the particle based on image features, producing a sort decision that is used to selectively charge the droplets.

### NON-TRANSITORY COMPUTER-READABLE STORAGE MEDIA

Aspects of the present disclosure further include non-transitory computer readable storage mediums having instructions for practicing the subject methods. Computer readable storage mediums may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, flash drive, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Java, Python, Visual Basic, and C++, as well as many others.

In some embodiments, computer readable storage media of interest include a computer program stored thereon, where the computer program when loaded on the computer includes instructions for (e.g., automatically) generating a label for a flow cytometry gate by: identifying a parameter associated with a dimension of a data space of a flow cytometry gate and a plurality of data points, wherein a subset of the data points are encompassed by the gate; calculating a metric indicating a magnitude of the parameter for the gated data points; and comparing the metric with a predetermined magnitude threshold to generate a label for the gate.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for (e.g., automatically) generating a label for a flow cytometry gate. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In addition to the above components, the subject kits may further include (in some embodiments) instructions, e.g., for installing the plugin to the existing software package. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, 5 on which the information has been recorded. Yet another form of these instructions that may be present is a website address which may be used via the internet to access the information at a removed site.

### UTILITY

The subject methods and computer systems find use in a variety of applications where it is desirable to generate a label for a flow cytometry gate. For example, the present disclosure finds use in creating clear, informative, and easily comparable flow cytometry gate labels. As such, the disclosure finds use in facilitating data interpretation, reducing analysis times, and discerning key findings as the plots and charts used to visualize and understand flow cytometry data become increasingly clear and easy to follow through use of the disclosed methods and systems. In some embodiments, the subject methods and systems provide automated processes for generating intuitive and descriptive flow cytometry gate labels that can be readily and unambiguously understood by users. As such, the disclosure finds use in facilitating data sharing between users.

The present disclosure can be employed to generate gate labels pertaining to (e.g., encompassing data points generated from) many types of analytes, in particular, analytes relevant to medical diagnosis or protocols for caring for a patient, including but not limited to: proteins (including both free proteins and proteins and proteins bound to the surface of a structure, such as a cell), nucleic acids, viral particles, and the like. Further, samples can be from in vitro or in vivo sources, and samples can be diagnostic samples.

### EXAMPLES

As can be appreciated from the disclosure provided above, embodiments of the present disclosure have a wide variety of applications. Accordingly, the following examples are put forth so as to provide those of ordinary skill in the art with a complete description of how to use the present disclosure, and are not intended to limit the scope of the disclosure, nor are they intended to represent that the experiments below are all or the only experiments performed. Efforts have been made to ensure accuracy with respect to numbers used but some experimental errors and deviations should be accounted for.

### Example 1: The Geometric Approach

### Introduction:

A label was automatically generated for a flow cytometry gate input located in a data space having two dimensions, each dimension of the data space corresponding to the measurements of a single parameter. The gate input label was generated using a geometric approach (i.e., based on the shape and location of the gate, e.g., as described above) in accordance with embodiments of the disclosure.

### Automated Geometric Method:

A. Given two parameters (e.g., X and Y), and a geometric region (gate) G, the gate is decomposed into its X and Y parameter components, from which Xmin, Xmax, Ymin and Ymax are derived. The distance from the min to the max implies the range of the parameter described by the gate.
B. The following logic was used to categorize the gate and assign a label:
   i.If min and max are both below the 50%ile of the parameter, it is labeled as "P -" where P is the name of the parameter and the character "-" denotes negative expression.
   ii.If max is above 50%ile of the parameter distribution, it is labeled as "P +" where P is the name of the parameter and the character "+" denotes positive expression.
   iii.If min is above 50%ile of the parameter distribution, it is labeled as "P +++", where P is the name of the parameter, and the string "+++" denotes brightly positive expression.
C. In the case of a univariate gate, a single parameter label is returned (e.g., "P +"); in case of a bivariate gate, a concatenation of both parameters' labels is returned (e.g., "P +, Q -").

### Results:

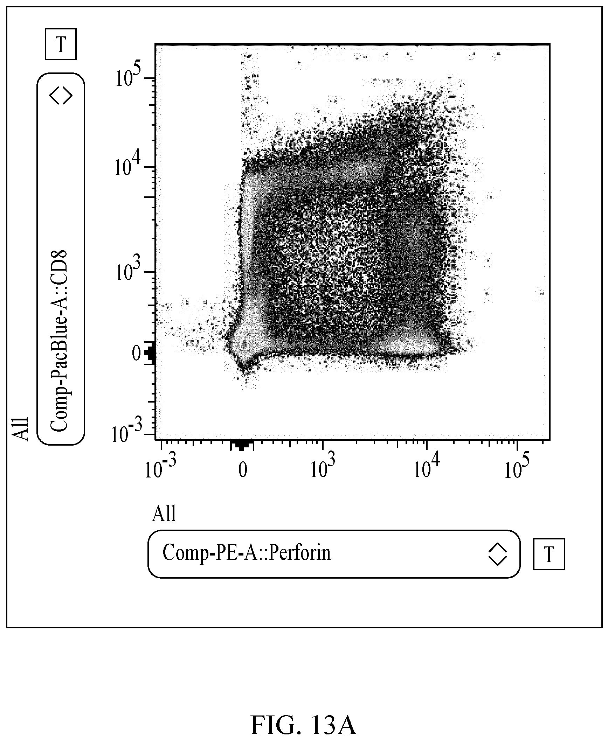

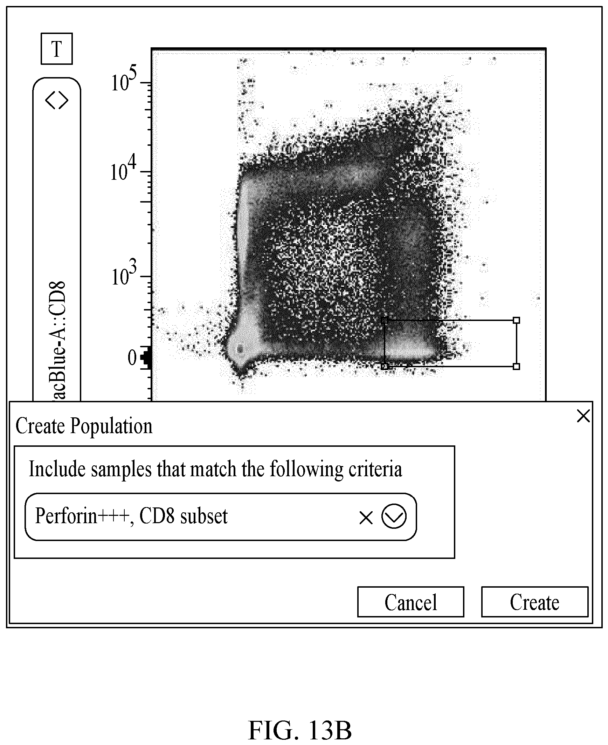

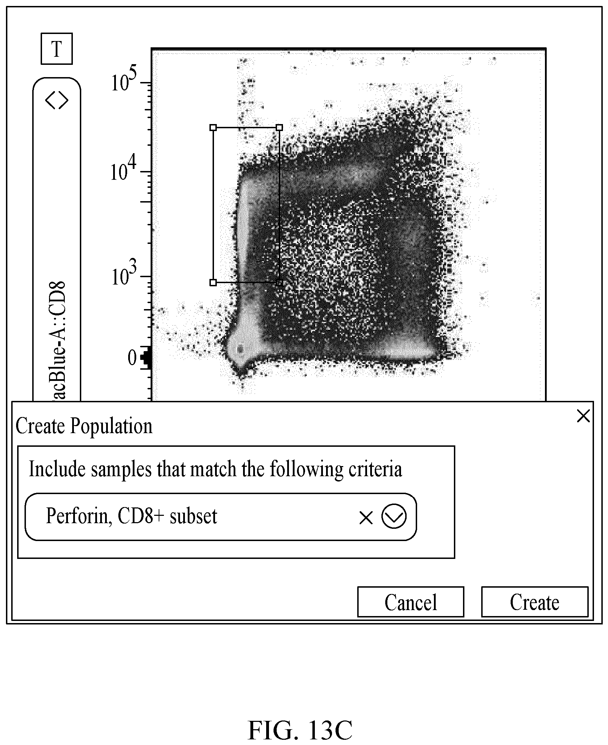

**FIGS. 13A** to **13C** provide exemplary gate input labels automatically generated for a bivariate plot reflecting real parameters (i.e., parameters measured by a flow cytometer) in accordance with an embodiment of the disclosure. **FIG. 13A** depicts an ungated bivariate distribution of fluorescent parameters. **FIG. 13B** a gate is created around a population that is only CD8+. The suggested automatically generated name matches the properties of the created population. **FIG. 13C** a gate is created around a population that is bright for the Perforin parameter. The suggested automatically generated name matches the properties of the created population.

### Example 2: The Data Distribution Approach

### Introduction:

A label was automatically generated for a flow cytometry gate input located in a data space having two dimensions, each dimension of the data space corresponding to the measurements of a plurality of parameters. The gate input label was generated using a data distribution approach (i.e., based on a distribution of gated versus ungated data points, e.g., as described above) in accordance with embodiments of the disclosure.

### Automated Data Distribution Method:

A. Collect a list of pertinent parameters to interrogate. For example, when t-distributed Stochastic Neighbor Embedding (t-SNE) is calculated, the information about which parameters were the input is retained.
B. For each parameter from the collected list above.
   i.Request a histogram distribution.
   ii.Calculate the geometric mean of the distribution for both un-gated cells
      and the newly created gate (i.e., gated cells).
   iii.Compare the two geometric means.
C. Determine if the "Gated Geometric Mean" is some predetermined amount higher than the "Ungated Geometric Mean", if so consider that parameter to be a significant contributor to the description of that population and add the parameter to "Positive Parameters" list.
D. Return a concatenation of all the Positive Parameters' names with a suffix "subset", ex. "P1 +, P2+, P3+ subset".

### Results:

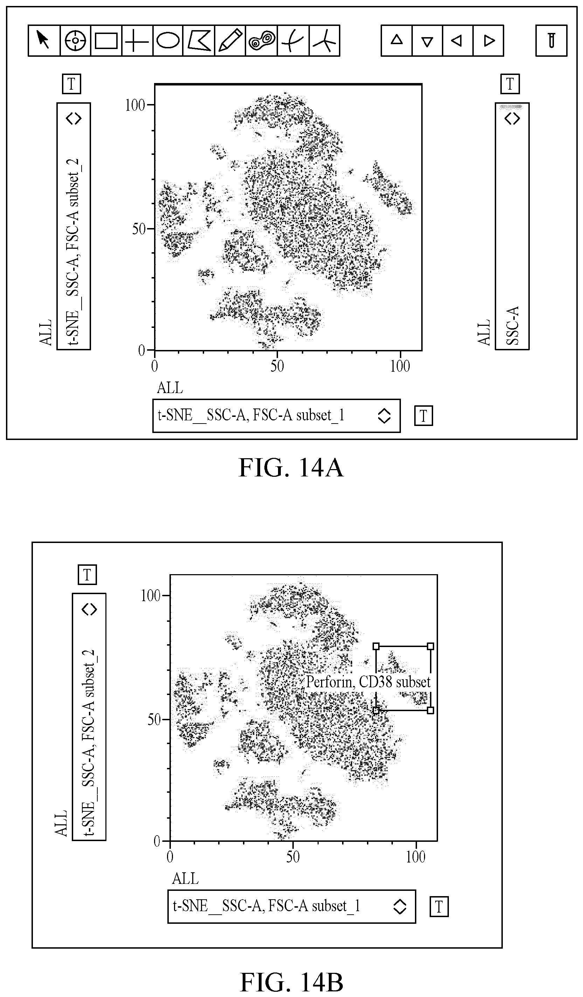

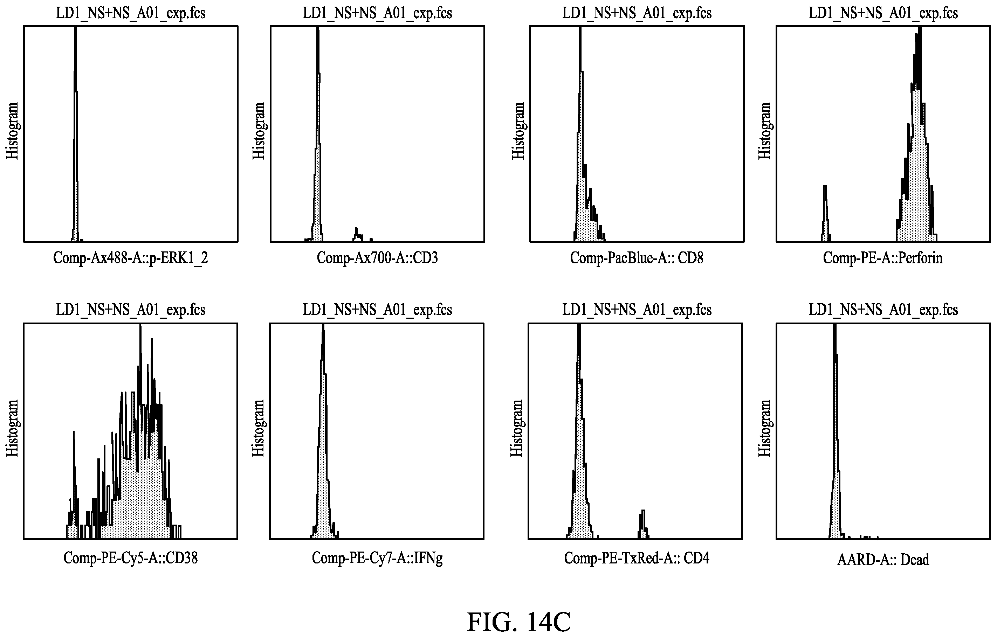

**FIGS. 14A** to **14C** provide an exemplary gate input label automatically generated for a bivariate plot of a dimensionally reduced data space in accordance with an embodiment of the disclosure. **FIG. 14A** depicts an ungated bivariate distribution of a data set which was parameter reduced using t-SNE. **FIG. 14B** a newly created gate on the distribution is automatically labeled or named after the majorly contributing parameters. **FIG. 14C** verification of the newly created gate reveals it is indeed defined by Perforin and CD38 brightness. The created gate is queried for measurements of every input parameter to the parameter reduction platform - big shift changes between the gated and ungated cell populations are focused on.

Notwithstanding the appended claims, the disclosure is also defined by the following clauses:
1. A method of labeling flow cytometry data, the method comprising:
   (a) receiving a flow cytometry gate input comprising a portion of the cytometry data;
   (b) identifying a plurality of parameters, each parameter associated with a dimension of a data space of the portion of the cytometry data;
   (c) calculating a metric for each parameter of at least a portion of the plurality of parameters based on a magnitude of the cytometry data associated with the respective parameter's dimension; and
   (d) generating a label for the flow cytometry gate input based on at least one metric and a predetermined magnitude threshold associated with the metric.
2. The method according to clause 1, wherein the generated label comprises the name of the parameter, the metric, a symbol associated with the parameter, a symbol associated with the metric, or any combination thereof.
3. The method according to clauses 1 or 2, wherein the metric is normalized by the average magnitude of the plurality of parameters.
4. The method according to clauses 1 or 2, wherein the metric is normalized by the sum of the magnitudes of the plurality of parameters.
5. The method according to any one of clauses 1-4, wherein calculating the metric comprises determining a ratio between a maximum magnitude of the associated dimension within the portion of the cytometry data and a magnitude of the associated dimension within the entire cytometry data.
6. The method according to any one of clauses 1-4, wherein calculating the metric comprises determining a ratio between a minimum magnitude of the associated dimension within the portion of the cytometry data and a magnitude of the associated dimension within the entire cytometry data.
7. The method according to any one of clauses 1-4, wherein calculating the metric comprises determining a difference between an average magnitude of the associated dimension within the portion of the cytometry data and a magnitude of the associated dimension within the entire cytometry data.
8. The method according to any one of clauses 1-7, wherein generating the label comprises determining that the metric meets or exceeds the predetermined magnitude threshold.
9. The method according to clause 8, wherein the label comprises a positive indicator of the parameter.
10. The method according to any one of clauses 1-7, wherein generating the label comprises determining that the metric meets or falls below the predetermined magnitude threshold.
11. The method according to clause 10, wherein the label comprises a negative indicator of the parameter.
12. The method according to clause 1, wherein the input is received by a selection on a graphical representation of the data space.
13. The method according to clause 12, wherein the data space is dimensionally reduced.
14. The method according to clause 13, wherein the dimensionality reduction comprises a Principal Component Analysis (PCA) reduction, a t-distributed Stochastic Neighbor Embedding (t-SNE) reduction, a Uniform Manifold Approximation and Projection (UMAP) reduction, a machine learning model reduction, or any combination thereof.
15. The method according to any one of the preceding clauses, wherein the flow cytometry data comprises a plurality of data points wherein each data point corresponds to a measurement of a single sample cell.
16. The method according to any one of the preceding clauses, wherein each of the plurality of parameters corresponds to the presence or expression of a marker.
17. The method according to any one of the preceding clauses, wherein identifying the plurality of parameters comprises determining the number of dimensions of the data space.
18. The method according to clause 17, wherein identifying the plurality of parameters comprises determining the number of parameters associated with each dimension of the data space.
19. The method according to any one of the preceding clauses, further comprising displaying a confirmation prompt based on the generated label.
20. The method according to any one of the preceding clauses, further comprising displaying a prompt to edit the name of the generated label.
21. A system configured to perform the method according to any one of Clauses 1-20.
22. A system comprising:
   a flow cytometer configured to produce flow cytometry data; and
   a processor comprising memory operably coupled to the processor wherein the memory comprises instructions stored thereon, which when executed by the processor, cause the processor to:
      (a) receive a flow cytometry gate input comprising a portion of the flow cytometry data;
      (b) identify a plurality of parameters, each parameter associated with a dimension of a data space of the portion of the flow cytometry data;
      (c) calculate a metric for each parameter of at least a portion of the plurality of parameters based on a magnitude of the flow cytometry data associated with the respective parameter's dimension; and
      (d) generate a label for the flow cytometry gate input based on at least one metric and a predetermined magnitude threshold associated with the metric.
23. The system according to clause 22, wherein the generated label comprises the name of the parameter, the metric, a symbol associated with the parameter, a symbol associated with the metric, or any combination thereof.
24. The system according to clauses 22 or 23, wherein the metric is normalized by the average magnitude of the plurality of parameters.
25. The system according to clauses 22 or 23, wherein the metric is normalized by the sum of the magnitudes of the plurality of parameters.
26. The system according to any one of clauses 22-25, wherein the metric is calculated by determining a ratio between a maximum magnitude of the associated dimension within the portion of the cytometry data and a magnitude of the associated dimension within the entire cytometry data.
27. The system according to any one of clauses 22-25, wherein the metric is calculated by determining a ratio between a minimum magnitude of the associated dimension within the portion of the cytometry data and a magnitude of the associated dimension within the entire cytometry data.
28. The system according to any one of clauses 22-25, wherein the metric is calculated by determining a difference between an average magnitude of the associated dimension within the portion of the cytometry data and a magnitude of the associated dimension within the entire cytometry data.
29. The system according to any one of clauses 22-28, wherein the label is generated by determining that the metric meets or exceeds the predetermined magnitude threshold.
30. The system according to clause 8, wherein the label comprises a positive indicator of the parameter.
31. The system according to any one of clauses 22-28, wherein the label is generated by determining that the metric meets or falls below the predetermined magnitude threshold.
32. The system according to clause 31, wherein the label comprises a negative indicator of the parameter.
33. The system according to clause 22, wherein the input is received by a selection on a graphical representation of the data space.
34. The system according to clause 33, wherein the system further comprises:
   a visual display configured to display the graphical representation to a user; and
   an operator input device configured to receive the selection from the user.
35. The system according to clauses 33 or 34, wherein the data space is dimensionally reduced.
36. The system according to clause 35, wherein the dimensionality reduction comprises a Principal Component Analysis (PCA) reduction, a t-distributed Stochastic Neighbor Embedding (t-SNE) reduction, a Uniform Manifold Approximation and Projection (UMAP) reduction, a machine learning model reduction, or any combination thereof.
37. The system according to any one of clauses 22-36, wherein the flow cytometry data comprises a plurality of data points wherein each data point corresponds to a measurement of a single sample cell.
38. The system according to any one of clauses 22-37, wherein each of the plurality of parameters corresponds to the presence or expression of a marker.
39. The system according to any one of clauses 22-38, wherein the plurality of parameters are identified by determining the number of dimensions of the data space.
40. The system according to clause 39, wherein the plurality of parameters are identified by determining the number of parameters associated with each dimension of the data space.
41. The system according to any one of clauses 22-40, wherein the instructions, when executed by the processor, further cause the processor to display a confirmation prompt based on the generated label.
42. The system according to any one of clauses 22-41, wherein the instructions, when executed by the processor, further cause the processor to display a prompt to edit the name of the generated label.
43. A non-transitory computer readable storage medium comprising instructions stored thereon for labeling flow cytometry data by a method comprising:
   (a) receiving a flow cytometry gate input comprising a portion of the cytometry data;
   (b) identifying a plurality of parameters, each parameter associated with a dimension of a data space of the portion of the cytometry data;
   (c) calculating a metric for each parameter of at least a portion of the plurality of parameters based on a magnitude of the cytometry data associated with the respective parameter's dimension; and
   (d) generating a label for the flow cytometry gate input based on at least one metric and a predetermined magnitude threshold associated with the metric.
44. The non-transitory computer readable storage medium according to clause 43, wherein the generated label comprises the name of the parameter, the metric, a symbol associated with the parameter, a symbol associated with the metric, or any combination thereof.
45. The non-transitory computer readable storage medium according to clauses 43 or 44, wherein the metric is normalized by the average magnitude of the plurality of parameters.
46. The non-transitory computer readable storage medium according to clauses 43 or 44, wherein the metric is normalized by the sum of the magnitudes of the plurality of parameters.
47. The non-transitory computer readable storage medium according to any one of clauses 43-46, wherein calculating the metric comprises determining a ratio between a maximum magnitude of the associated dimension within the portion of the cytometry data and a magnitude of the associated dimension within the entire cytometry data.
48. The non-transitory computer readable storage medium according to any one of clauses 43-46, wherein calculating the metric comprises determining a ratio between a minimum magnitude of the associated dimension within the portion of the cytometry data and a magnitude of the associated dimension within the entire cytometry data.
49. The non-transitory computer readable storage medium according to any one of clauses 43-46, wherein calculating the metric comprises determining a difference between an average magnitude of the associated dimension within the portion of the cytometry data and a magnitude of the associated dimension within the entire cytometry data.
50. The non-transitory computer readable storage medium according to any one of clauses 43-49, wherein generating the label comprises determining that the metric meets or exceeds the predetermined magnitude threshold.
51. The non-transitory computer readable storage medium according to clause 50, wherein the label comprises a positive indicator of the parameter.
52. The non-transitory computer readable storage medium according to any one of clauses 43-49, wherein generating the label comprises determining that the metric meets or falls below the predetermined magnitude threshold.
53. The non-transitory computer readable storage medium according to clause 52, wherein the label comprises a negative indicator of the parameter.
54. The non-transitory computer readable storage medium according to clause 43, wherein the input is received by a selection on a graphical representation of the data space.
55. The non-transitory computer readable storage medium according to clause 54, wherein the data space is dimensionally reduced.
56. The non-transitory computer readable storage medium according to clause 55, wherein the dimensionality reduction comprises a Principal Component Analysis (PCA) reduction, a t-distributed Stochastic Neighbor Embedding (t-SNE) reduction, a Uniform Manifold Approximation and Projection (UMAP) reduction, a machine learning model reduction, or any combination thereof.
57. The non-transitory computer readable storage medium according to any one of clauses 43-56, wherein the flow cytometry data comprises a plurality of data points wherein each data point corresponds to a measurement of a single sample cell.
58. The non-transitory computer readable storage medium according to any one of clauses 43-57, wherein each of the plurality of parameters corresponds to the presence or expression of a marker.
59. The non-transitory computer readable storage medium according to any one of clauses 43-58, wherein identifying the plurality of parameters comprises determining the number of dimensions of the data space.
60. The non-transitory computer readable storage medium according to clause 59, wherein identifying the plurality of parameters comprises determining the number of parameters associated with each dimension of the data space.
61. The non-transitory computer readable storage medium according to any one of clauses 43-60, further comprising displaying a confirmation prompt based on the generated label.
62. The non-transitory computer readable storage medium according to any one of clauses 43-61, further comprising displaying a prompt to edit the name of the generated label.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A method of labeling flow cytometry data, the method comprising:
(e) receiving a flow cytometry gate input comprising a portion of the cytometry data;
(f) identifying a plurality of parameters, each parameter associated with a dimension of a data space of the portion of the cytometry data;
(g) calculating a metric for each parameter of at least a portion of the plurality of parameters based on a magnitude of the cytometry data associated with the respective parameter's dimension; and
(h) generating a label for the flow cytometry gate input based on at least one metric and a predetermined magnitude threshold associated with the metric.

2. The method according to claim 1, wherein the generated label comprises the name of the parameter, the metric, a symbol associated with the parameter, a symbol associated with the metric, or any combination thereof.

3. The method according to claims 1 or 2, wherein the metric is normalized by the average magnitude of the plurality of parameters.

4. The method according to claims 1 or 2, wherein the metric is normalized by the sum of the magnitudes of the plurality of parameters.

5. The method according to any one of claims 1-4, wherein calculating the metric comprises:
determining a ratio between a maximum magnitude of the associated dimension within the portion of the cytometry data and a magnitude of the associated dimension within the entire cytometry data; or
determining a ratio between a minimum magnitude of the associated dimension within the portion of the cytometry data and a magnitude of the associated dimension within the entire cytometry data; or
determining a difference between an average magnitude of the associated dimension within the portion of the cytometry data and a magnitude of the associated dimension within the entire cytometry data.

6. The method according to any one of claims 1-5, wherein generating the label comprises determining that the metric meets or exceeds the predetermined magnitude threshold.

7. The method according to any one of claims 1-5, wherein generating the label comprises determining that the metric meets or falls below the predetermined magnitude threshold.

8. The method according to claim 1, wherein the input is received by a selection on a graphical representation of the data space.

9. The method according to any one of the preceding claims, wherein the flow cytometry data comprises a plurality of data points wherein each data point corresponds to a measurement of a single sample cell.

10. The method according to any one of the preceding claims, wherein each of the plurality of parameters corresponds to the presence or expression of a marker.

11. The method according to any one of the preceding claims, wherein identifying the plurality of parameters comprises determining the number of dimensions of the data space.

12. The method according to any one of the preceding claims, further comprising displaying a confirmation prompt based on the generated label.

13. A system configured to perform the method according to any one of Claims 1-12.

14. A system comprising:
a flow cytometer configured to produce flow cytometry data; and
a processor comprising memory operably coupled to the processor wherein the memory comprises instructions stored thereon, which when executed by the processor, cause the processor to:
(a) receive a flow cytometry gate input comprising a portion of the flow cytometry data;
(b) identify a plurality of parameters, each parameter associated with a dimension of a data space of the portion of the flow cytometry data;
(c) calculate a metric for each parameter of at least a portion of the plurality of parameters based on a magnitude of the flow cytometry data associated with the respective parameter's dimension; and
(d) generate a label for the flow cytometry gate input based on at least one metric and a predetermined magnitude threshold associated with the metric.

15. A non-transitory computer readable storage medium comprising instructions stored thereon for labeling flow cytometry data by a method comprising:
(e) receiving a flow cytometry gate input comprising a portion of the cytometry data;
(f) identifying a plurality of parameters, each parameter associated with a dimension of a data space of the portion of the cytometry data;
(g) calculating a metric for each parameter of at least a portion of the plurality of parameters based on a magnitude of the cytometry data associated with the respective parameter's dimension; and
(h) generating a label for the flow cytometry gate input based on at least one metric and a predetermined magnitude threshold associated with the metric.
